(19) Europäisches Patentamt

European Patent Office

Office européen des brevets

(11) EP 1 075 867 A1

## (12) EUROPEAN PATENT APPLICATION
published in accordance with Art. 158(3) EPC

(43) Date of publication:
14.02.2001 Bulletin 2001/07

(21) Application number: 98943056.6

(22) Date of filing: 18.09.1998

(51) Int. Cl.⁷: B01D 53/28, B01J 20/28, E04B 1/64

(86) International application number:
PCT/JP98/04227

(87) International publication number:
WO 99/51327 (14.10.1999 Gazette 1999/41)

(84) Designated Contracting States:
DE ES IT

(30) Priority: 02.04.1998 JP 10855598

(71) Applicant: TOTO LTD.
Kitakyushu-shi, Fukuoka-ken 802-8601 (JP)

(72) Inventors:
• KAMESHIMA, Junji,
Toto Ltd
Kita-kyusyu-shi, Fukuoka 802-8601 (JP)

• KOBAYASHI, Hideki,
Toto Ltd
Kita-kyusyu-shi, Fukuoka 802-8601 (JP)

(74) Representative:
Grünecker, Kinkeldey,
Stockmair & Schwanhäusser
Anwaltssozietät
Maximilianstrasse 58
80538 München (DE)

### (54) HUMIDITY-CONTROLLING FUNCTIONAL MATERIAL AND PROCESS FOR THE PRODUCTION THEREOF

(57) A humidity-controlling tile can be produced by mixing 70 wt% of porous alumina particles having specific pores (having pore diameters of about 3 to 8 nm and a pore volume of about 0.4 cc/g) as aggregate with 20 wt% of glass frit as binder and 10 wt% of clay a plastic material with the water content controlled suitably, press-molding the slurry thus obtained into a tile-shaped product, and firing the product at a temperature (about 850 °C) lower than the melting temperature of alumina but higher than that of the binder (glass frit) to bind the porous alumina particles with molten glass frit. The tile ahs a structure wherein porous alumina particles having the above specific pores and being adjacent to each other are bonded to each other with glass frit, thus being useful as a humidity-controlling functional material having a high humidity-controlling performance.

FIG.1

EP 1 075 867 A1

## Description

TECHNICAL FIELD

The present invention relates to humidity-controlling functional materials for controlling the humidity through the adsorption of water vapor and the release of water vapor, and more particularly to humidity-controlling functional materials for controlling the humidity through the adsorption of water vapor onto fine pores and the release of water vapor from the fine pores, and processes for producing the same. The present invention also relates to humidity-controlling functional materials used with a photocatalyst which, upon exposure to light, produces active oxygen species through the action of light energy to permit the photocatalyst to function as a catalyst, and processes for producing the same.

BACKGROUND ART

In recent years, for example, spreading of the so-called "aluminum sash" has enhanced the airtightness of houses. This had led to a desire to control the humidity within the houses for the prevention of dew condensation in the winter season and other purposes. For this reason, an attempt has been made to impart the function of controlling the humidity, that is, a humidity-controlling function, to interior wall materials per se. For example, Japanese Patent Laid-Open No. 354514/1992 proposes a novel functional material which uses a specific diatomaceous earth and utilizes the humidity-controlling function of the diatomaceous earth. Japanese Patent Laid-Open No. 93662/1991 proposes compounding of zeolite or other materials having the function of absorbing moisture with cement or the like.

However, it has been pointed out that even these conventional humidity-controlling functional materials have the following problems. Specifically, in the case of the technique proposed in Japanese Patent Laid-Open No. 354514/1992, the humidity-controlling properties rely upon the humidity-controlling properties possessed by the diatomaceous earth, a naturally occurring product, and thus were not always satisfactory. The strength of products produced using the diatomaceous earth decreases with increasing the content of the diatomaceous earth. Therefore, increasing the content of the diatomaceous earth to provide a high level of humidity-controlling properties resulted in strength on an unsatisfactory level that could not function as building materials and other products. Under these circumstances, the content of the diatomaceous earth is restricted by the strength required in the contemplated product. This also has made it difficult to provide satisfactory humidity-controlling properties.

On the other hand, in the case of the technique proposed in Japanese Patent Laid-Open No. 93662/1991, moisture-absorbing functional materials, such as zeolite, absorb moisture through the adsorption of water vapor. Since, however, heating or the like should be separately carried out for releasing the once adsorbed water vapor (gas), the adsorption of water vapor and the release of the water vapor do not proceed reversibly. For this reason, even the use of moisture-absorbing functional materials, such as zeolite, could not provide satisfactory humidity-controlling properties.

Further, in recent years, there is an ever-increasing tendency toward deepening of the recognition of environmental preservation and purification of the environment, or cleaning of dwelling environment and imparting of comfortability to dwelling environment or the like. For this reason, converting various harmful components contained in the air, for example, nitrogen oxides (NOx), to a harmless reaction product (nitric acid) and the degradation of bacteria through the oxidation of organic components, that is, the so-called "antimicrobial action," have become desired in the art.

The present invention has been made with a view to solving the above problems, and it is an object of the present invention to provide a humidity-controlling functional material having a higher level of humidity-controlling properties. It is another object of the present invention to provide a humidity-controlling functional material which can exhibit a high level of humidity-controlling properties and, at the same time, can contribute to environmental preservation and purification of the environment, or cleaning of dwelling environment and imparting of comfortability to dwelling environment or the like.

DISCLOSURE OF THE INVENTION

In order to attain at least a part of the objects, according to the present invention, there is provided a first humidity-controlling functional material for controlling the humidity through the adsorption of water vapor and the release of water vapor, characterized in that

said humidity-controlling functional material comprises aggregates and a binder for fixing the aggregates onto one another,
said aggregate comprises particles having fine pores which can contact with the air, and

said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g.

In the first humidity-controlling functional material having the above construction according to the present invention, the humidity is controlled by fine pores, which are possessed by aggregates fixed onto one another with the aid of a binder, through the adsorption of water vapor and the release of water vapor. For the fine pores, the fine pore volume is as large as about 0.25 to about 1.2 cc/g. This can contribute to improved humidity-controlling properties. When the fine pore volume is not less than about 0.25 cc/g, the humidity-controlling properties can be surely improved. When the fine pore volume is not more than about 1.2 cc/g, the lowering in strength of the aggregate per se can be suppressed, making it possible to maintain the strength as the humidity-controlling functional material.

In this case, the diameter of the fine pores is preferably about 2 to about 20 nm. As described below, the adoption of this fine pore diameter can surely control the humidity.

In general, changes in the state of gas in fine pores, that is, the liquefaction of gas by condensation in the fine pores and the gasification of the liquid, relies upon the diameter of fine pores. The radius of fine pores, which causes such a change in state, is called "Kelvin radius" based on the Kelvin's theory of capillary condensation, and determined by the following Kelvin's equation.

$$rk = (-2 \cdot r \cdot M \cdot \cos\theta)/(\rho \cdot R \cdot T \cdot 1nRH)$$

where rk represents Kelvin radius; r represents the surface tension of liquid water produced by liquefaction of gas by condensation; M represents the molecular mass of the liquid water; $\theta$ represents contact angle; $\rho$ represents the specific gravity of gas; R represents gas constant; T represents temperature; and RH represents relative humidity.

The condensation of gas in the fine pores takes place after the interior of the fine pores is entirely covered with adsorbed gas to form an adsorption layer of gas. In this case, the contact angle $\theta$ becomes zero. Therefore, when gas is water vapor, the Kelvin radius can be calculated from the relative humidity RH and the temperature T. When the relative humidity is 10% to 95% with the temperature being 10°C to 30°C, that is, when the Kelvin radius is calculated in a temperature range suitable for dwelling environment and in the above relative humidity range, the results are as summarized in Table 1.

Table 1

| Relative humidity, % | Temperature, °C | | |
|---|---|---|---|
| | 10 | 20 | 30 |
| 10 | 0.50 | 0.47 | 0.45 |
| 20 | 0.71 | 0.67 | 0.64 |
| 30 | 0.95 | 0.90 | 0.85 |
| 40 | 1.25 | 1.18 | 1.12 |
| 50 | 1.65 | 1.56 | 1.48 |
| 60 | 2.23 | 2.12 | 2.01 |
| 70 | 3.20 | 3.03 | 2.88 |
| 80 | 5.11 | 4.85 | 4.60 |
| 90 | 10.83 | 10.26 | 9.74 |
| 95 | 22.25 | 21.08 | 20.00 |

The range of relative humidity regarded as suitable for providing comfort in dwelling environment is about 40 to 70%. When the Kelvin's theory of capillary condensation is considered in relation with the control of humidity in the dwelling environment, it can be said that a Kelvin radius of fine pores of about 1.12 to about 3.20 nm, that is, a fine pore diameter of about 2 to about 7 nm, can ideally cause changes in state of gas through the fine pores. In this case, it can be said that reversible adsorption of water vapor as gas occurs. Further, it can be said that, even though the relative humidity is as high as about 90%, when this high relative humidity is temporary and the relative humidity is then lowered, a very high level of uncomfort does not continue in even this high relative humidity. For this reason, it can be said that a Kelvin radius of fine pores of about 1.12 to about 10.83 nm, that is, a diameter of fine pores of about 2 to about 20 nm, can cause tolerable changes in state of water vapor (liquefaction of water vapor and gasification of the liquid to form water vapor) through the fine pores in dwelling environment. In the first humidity-controlling functional material according to the present invention, the possession of fine pores having a diameter of about 2 to about 20 nm with the above-described high fine pore volume can ensure the control of humidity. In this case, associating the Kelvin's theory of capillary condensation with the control of humidity in dwelling environment has not been attempted in the field of conventional humidity control techniques, and has been made for the first time by the present inventor.

According to the present invention, there is provided a second humidity-controlling functional material for controlling the humidity through the adsorption of water vapor and the release of water vapor, characterized in that

said humidity-controlling functional material comprises a porous substrate, which also serves as a matrix, and a filler contained in the matrix,
said filler comprises particles having fine pores which can come into contact with the air through the pores of the substrate,
said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g, and
the pores of the substrate have larger diameter than the fine pores of the filler.

In the second humidity-controlling functional material having the above construction according to the present invention, water vapor is led from the surface of the substrate to the filler through the pores of the substrate, and the fine pores in the filler function to control the humidity. The second humidity-controlling functional material has the so-called "composite structure" wherein a filler is contained in the matrix of the porous substrate. Therefore, strength as humidity-controlling functional materials can be ensured.

In this case, when the porous substrate is a porous building material such as concrete or gypsum board, the humidity can be advantageously controlled by these building materials per se constituting the dwelling environment. Further, this can advantageously eliminate the need to perform any special work for rendering the material porous. The amount of the filler incorporated may be determined by taking into consideration the amount of water vapor in environment under which this humidity-controlling functional material is used. In the case of inner wall materials in housing, the filler may be incorporated in an amount of about 3 to about 150 parts by weight based on 100 parts by weight of the porous building material.

According to the present invention, there is provided a third humidity-controlling functional material for controlling the humidity through the adsorption of water vapor and the release of water vapor, characterized in that

said humidity-controlling functional material comprises a core material and a surface layer provided on the surface of the core material,
said surface layer contains particles having fine pores which can contact with the air, and
said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g.

In the third humidity-controlling functional material having the above construction according to the present invention, the fine pores in the surface layer located on the surface of the core material has the function of controlling the humidity.

According to the present invention, there is provided a fourth humidity-controlling functional material for controlling the humidity through the adsorption of water vapor and the release of water vapor, characterized in that

said humidity-controlling functional material comprises a core material and a surface layer provided on the surface of the core material,
said surface layer comprises a porous substrate, which also serves as a matrix, and a filler contained in the matrix,
said filler comprises particles having fine pores which can come into contact with the air through the pores of the substrate,
said fine pores have diameters such that, depending upon the humidity, the adsorption of water vapor onto the fine pores and the release of water vapor from the fine pores take place to exhibit the function of controlling the humidity,
said fine pores having a fine pore volume of about 0.25 to about 1.2 cc/g, and
the pores of the substrate have larger diameter than the fine pores of the filler.

In the fourth humidity-controlling functional material having the above construction according to the present invention, in controlling the humidity by the surface layer located on the surface of the core material, water vapor is led from the surface of the surface layer to the filler in the surface layer through the pores of the substrate in the surface layer, and the fine pores in the filler function to control the humidity.

Therefore, in the third and fourth humidity-controlling functional materials according to the present invention, the function of controlling the humidity is not significantly influenced by the properties of the core material. This can realize the expansion of the field of application of the humidity-controlling functional material according to the present invention and, at the same time, advantageously enables the existing materials, for example, concrete, resins, metals, glasses, earthenware, wood and other building materials as such to be used. Further, a high level of humidity-controlling function can be imparted to these existing building materials. This can enhance the added value of the building materials. Further, what is required here is only to incorporate, into the surface layer, the above particles for imparting the humidity-controlling function. This can advantageously reduce the amount of the particles to be used.

According to the present invention, there is provided a fifth humidity-controlling functional material for controlling the humidity through the adsorption of water vapor and the release of water vapor, characterized in that

fine pores, which can contact with the air, have been formed by gaps among material particles constituting the humidity-controlling functional material per se so as to have diameters such that, depending upon the humidity, the adsorption of water vapor onto the fine pores and the release of water vapor from the fine pores take place to exhibit the function of controlling the humidity.

In the fifth humidity-controlling functional material having the above construction according to the present invention, fine pores defined by gaps among the material particles constituting the humidity-controlling functional material per se function to control the humidity through the adsorption of water vapor and the release of water vapor.

According to the present invention, there is provided a sixth humidity-controlling functional material for controlling the humidity through the adsorption of water vapor and the release of water vapor, characterized in that

said humidity-controlling functional material comprises aggregates and a binder for fixing the aggregates onto one another,
said aggregate has fine pores which can contact with the air and have been formed by gaps among material particles constituting the aggregate per se so as to have diameters such that, depending upon the humidity, the adsorption of water vapor onto the fine pores and the release of water vapor from the fine pores take place to exhibit the function of controlling the humidity.

In the sixth humidity-controlling functional material having the above construction according to the present invention, fine pores defined by gaps among the material particles constituting the aggregate per se function to control the humidity through the adsorption of water vapor and the release of water vapor.

According to the present invention, there is provided a seventh humidity-controlling functional material for controlling the humidity through the adsorption of water vapor and the release of water vapor, characterized in that

said humidity-controlling functional material comprises a porous substrate, which also serves as a matrix, and a filler contained in the matrix,
said filler has fine pores which can come into contact with the air through the pores of the substrate and have been formed by gaps among material particles constituting the filler per se so as to have diameters such that, depending upon the humidity, the adsorption of water vapor onto the fine pores and the release of water vapor from the fine pores take place to exhibit the function of controlling the humidity, and
the pores of the substrate have larger diameter than the fine pores of the filler.

In the seventh humidity-controlling functional material having the above construction according to the present invention, water vapor is led from the surface of the substrate to the filler through the pores in the substrate. In this case, fine pores defined by gaps among the material particles constituting the filler per se function to control the humidity. Further, the seventh humidity-controlling functional material has the so-called "composite structure" wherein a filler is contained in the matrix of the porous substrate. Therefore, strength as humidity-controlling functional materials can be ensured.

In this case, when the porous substrate is a porous building material such as concrete or gypsum board, the humidity can be advantageously controlled by these building materials per se constituting the dwelling environment. Further, this can advantageously eliminate the need to perform any special work for rendering the material porous. The amount of the filler incorporated may be determined by taking into consideration the amount of water vapor in environment under which this humidity-controlling functional material is used. In the case of inner wall materials in housing, the filler may be incorporated in an amount of about 3 to about 150 parts by weight based on 100 parts by weight of the porous building material.

According to the present invention, there is provided an eighth humidity-controlling functional material for controlling the humidity through the adsorption of water vapor and the release of water vapor, characterized in that

said humidity-controlling functional material comprises a core material and a surface layer provided on the surface of the core material,
said surface layer has fine pores which can contact with the air and have been formed by gaps among material particles constituting the surface layer per se so as to have diameters such that, depending upon the humidity, the adsorption of water vapor onto the fine pores and the release of water vapor from the fine pores take place to exhibit the function of controlling the humidity.

In the eighth humidity-controlling functional material having the above construction according to the present invention, fine pores defined by gaps among the material particles constituting the surface layer per se located on the surface of the core material function to control the humidity.

According to the present invention, there is provided a ninth humidity-controlling functional material for controlling the humidity through the adsorption of water vapor and the release of water vapor, characterized in that

said humidity-controlling functional material comprises a core material and a surface layer provided on the surface of the core material,
said surface layer comprises a porous substrate, which also serves as a matrix, and a filler contained in the matrix,
said filler has fine pores which can come into contact with the air through the pores of the substrate and have been formed by gaps among material particles constituting the filler per se so as to have diameters such that, depending upon the humidity, the adsorption of water vapor onto the fine pores and the release of water vapor from the fine pores take place to exhibit the function of controlling the humidity, and
the pores of the substrate have larger diameter than the fine pores of the filler.

In the ninth humidity-controlling functional material having the above construction according to the present invention, in controlling the humidity by the surface layer located on the surface of the core material, water vapor is led from the surface of the surface layer to the filler in the surface layer through the pores of the substrate in the surface layer, and the fine pores defined by gaps among the material particles constituting the filler per se function to control the humidity.

Therefore, in the eighth and ninth humidity-controlling functional materials according to the present invention, the function of controlling the humidity is not significantly influenced by the properties of the core material. Therefore, these humidity-controlling functional materials according to the present invention can realize the expansion of the field of application of humidity-controlling functional materials and, at the same time, advantageously enables the existing materials, for example, concrete, resins, metals, glasses, earthenware, wood and other building materials as such to be used. Further, a high level of humidity-controlling function can be imparted to these existing building materials. This can enhance the added value of the building materials. Further, what is required here is only to incorporate, into the surface layer, the material for imparting the humidity-controlling function, that is, the material for constituting the surface layer or the material for constituting the filler. This can advantageously reduce the amount of the constituent material to be used.

As described above, in the second to ninth humidity-controlling functional materials according to the present invention, a diameter of fine pores of about 2 to about 20 nm is preferred from the viewpoint of surely controlling the humidity. Further, in the first to ninth humidity-controlling functional materials according to the present invention, a humidity-controlling property value of not less than about 5% as measured under an environment having a temperature of about 20°C is preferred from the viewpoint of realizing comfortable dwelling environment in terms of humidity. In particular, in the first humidity-controlling functional material comprising aggregates fixed to one another with the aid of a binder, the strength depends upon the amount of the aggregates used and the fixation strength (bonding strength) created by the binder. For this reason, satisfying a humidity-controlling property value of not less than about 10% under an environment having temperature of about 20°C and a bending strength of not less than 500 N/cm$^2$ in the form of a plate material is preferred because, in this case, there occurs no problem in the development of products, such as building materials, from the viewpoint of the humidity-controlling properties, as well as from the viewpoint of strength.

The third, fourth, eighth, or ninth humidity-controlling functional material according to the present invention may be such that

a skin layer covering the surface layer is further provided, and
the skin layer is a porous layer which has through-pores having larger diameters than the fine pores.

In the humidity-controlling functional material according to this first embodiment, water vapor is led through the pores in the skin layer as the outermost surface to the underlying surface layer. In this case, as described above, the surface layer functions to control the humidity. In the humidity-controlling functional material according to this embodiment, since the surface layer having the function of controlling the humidity can be protected by the skin layer, it is possible to prevent damage to the surface layer, separation and other unfavorable phenomena. By virtue of this, the function of controlling the humidity can be maintained.

Further, according to the present invention, there is provided a storage structure having the function of controlling the humidity. The storage structure is one for storing articles desired to be stored under a humidity-controlled environment, characterized in that

any one of the first to ninth humidity-controlling functional material according to the present invention is used as a partition material for partitioning a space for storing the articles.

According to this storage structure of the present invention, the humidity of the storage zones can be controlled by the partition material per se for partitioning the space for storing the articles, and, as described above, the interior of the storage zones can be maintained at a relative humidity of about 40 to about 70%. Incidentally, for articles such as books and postage stamps, furniture and furs, clothes or costumes and textiles, and, in addition, curios, pictures and other art objects, it is said that the control of humidity is important for storing these articles so as to avoid damage, deterioration and the like. In this case, the storage under an environment having a relative humidity of about 40 to about 70% is necessary. Further, it is also said that the control of humidity is important for stabilizing the quality of sound in musical instruments, such as pianos and violins. In this case, the storage or use (playing) of these musical instruments under an environment having a relative humidity of about 40 to about 70% is necessary. To this end, air conditioning mainly for controlling the humidity has been required in the past. By contrast, the storage structure according to the present invention as such can maintain the storage zones at a relative humidity of about 40 to about 70%. Therefore, the above-described articles such as books and postage stamps can be placed under an environment having a humidity suitable for the storage of these articles. This can eliminate the necessity of air conditioning. Thus, according to the storage structure of the present invention, these articles can be advantageously properly stored in a simple and cost-effective manner. The storage structure may be one having a relatively small capacity, such as a storage container or a carrying container, as well as one having a large capacity, such as a storage warehouse or a storehouse. In particular, in musical instruments, such as pianos or violins, the use of these storage warehouses and storehouses in concert halls or studios for these musical instruments is preferred, because these musical instruments can be placed under an environment having the above humidity during playing, as well as for a storage period after playing. In this case, as described above, associating the Kelvin's theory of capillary condensation with the control of humidity in an environment under which articles are stored, has not hitherto been attempted in the field of conventional humidity control techniques, not to mention the field of conventional storage techniques, and has been made for the first time by the present inventor.

The first, second, fifth, sixth, or seventh humidity-controlling functional material according to the present invention may be such that

a skin layer covering the surface is further provided, and
said skin layer is a porous layer that has through-pores having larger diameters than the fine pores and contains a photocatalyst which, upon exposure to light, produces active oxygen species through the action of light energy to permit the photocatalyst to function as a catalyst.

Further, in the humidity-controlling functional material according to the above first embodiment, the skin layer may contain a photocatalyst which, upon exposure to light, produces active oxygen species through the action of light energy to permit the photocatalyst to function as a catalyst.

In the humidity-controlling functional material according to the second and third embodiments, as described above, since the skin layer provided on the surface of the humidity-controlling functional material having the function of controlling the humidity contains a photocatalyst, the following advantage is provided in addition to an advantage that the function of controlling the humidity is good. Since the skin layer is a porous layer, water vapor is led to the surface of the underlying humidity-controlling functional material. Therefore, the skin layer poses no problem associated with the function of controlling the humidity.

For the environmental preservation and the purification of environment, there are two methods, that is, a method wherein components, contained in the air, causative of air pollution and the emission of a bad smell, or components harmful to the human body are adsorbed, and a method wherein compounds of causative components are converted to harmless compounds. The adoption of the latter method is most effective. In the humidity-controlling functional material according to the above embodiment, since the skin layer is porous, the adsorption of causative components onto pores in the skin layer occurs. When the amount of gas adsorbed onto the pores is saturated, the adsorption of gas no longer takes place, and, thus, the causative components cannot be constantly removed. Further, it should be noted that, in the pores, not only gas adsorption but also release of gas occurs. The amount of gas adsorbed is determined by the equilibrium between the gas adsorption and the gas release. Also in this point, it is difficult to constantly remove the causative components.

The control of humidity causes the content of water on the surface of the humidity-controlling functional material to become excessive, and, thus, the surface of the humidity-controlling functional material is likely to become a hotbed of the propagation of bacteria and fungicide. Leaving the propagation of bacteria and fungicide as it is, makes it impossible to achieve the purification of dwelling environment and the comfortable dwelling environment.

As is apparent from the following description, however, the humidity-controlling functional materials according to the second and third embodiments can remove these causative components by the skin layer to realize the preservation and purification of environment, or can inhibit the propagation of bacteria and fungicide to achieve the purification of dwelling environment and comfortable dwelling environment.

The photocatalyst contained in the skin layer, upon exposure to light, produces active oxygen species through the action of light energy to permit the photocatalyst to function as a catalyst. This type of photocatalysts usable herein include titanium dioxide ($TiO_2$), zinc oxide (ZnO), vanadium oxide ($V_2O_5$), and tungsten oxide ($WO_3$). These photocatalysts are not restricted by their crystal form and may be in any crystal form. For example, for titanium dioxide, the crystal form may be an anatase, rutile, or brookite form. However, the anatase titanium dioxide is preferred from the viewpoint of good availability and the like. This type of photocatalyst, for example, titanium dioxide in an anatase crystal form, produces excitation electrons and positive holes upon exposure to energy of light (ultraviolet light), and the excitation electrons and positive holes produce active oxygen species, such as O2-, O-, and • OH (wherein • represents an unpaired electron and means that the species attended with • is a radical species, in the presence of oxygen and water on the surface of the catalyst. Radical properties of the active oxygen species can be utilized in such a manner that the causative components in the air are oxidized with the active oxygen species under light irradiation and consequently converted to a harmless reaction product, thereby achieving environmental preservation and purification of environment. Radical properties possessed by the active oxygen species can cause oxidative degradation of organic components possessed by bacteria and fungicide cells under light irradiation to kill them, thereby achieving the purification of dwelling environment and the comfortable dwelling environment. That is, the incorporation of the photocatalyst into the skin layer permits the function of removing the causative components and the antimicrobial function to be newly provided by the skin layer.

Examples of the above causative components include: air pollutants, such as nitrogen oxides (NOx), sulfur oxides (SOx), and carbon monoxide (CO); components of bad smell, such as ammonia, methyl mercaptan, or acetaldehyde, a representative component of the smell of nicotine in cigarettes, cigars or tobacco; and harmful components, such as nitrogen oxides, formaldehyde, and volatile organic compounds (the so-called "VOC"). Here the process of the conversion of these components will be described by taking nitrogen oxides as an example.

In the course of an oxidation reaction of nitrogen oxides with active oxygen species, nitrogen dioxide ($NO_2$) is produced as an intermediate product, and this nitrogen dioxide is further oxidized and finally converted to nitric acid, a harmless substance. In addition to the adsorption of nitrogen oxides onto the pores of the skin layer and the reversible adsorption of gas in the fine pores in the humidity-controlling functional material underlying the skin layer, the production of nitric acid is always carried out through the action of the photocatalyst under light irradiation in the skin layer in the humidity-controlling functional materials according to the second and third embodiments. Therefore, in the humidity-controlling functional materials according to the second and third embodiments, causative components in the air, such as nitrogen oxides, can be reduced to purify the air, thereby achieving the environmental preservation and the purification of environment. In the case of sulfur oxides and carbon monoxide, sulfur dioxide is produced from sulfur oxides, and converted to sulfuric acid or sulfurous acid, while carbon dioxide is produced from carbon monoxide, and converted to carbon dioxide, i.e., carbonic acid gas. Thus, sulfur oxides and carbon monoxide are converted to harmless compounds. In the case of ammonia, nitrogen monoxide is produced from ammonia, and then converted to nitrogen dioxide and nitric acid. Thus, ammonia is converted to a harmless compound.

In this case, the photocatalysts are fixed onto one another through the binder to form a skin layer. Alternatively, a binder, such as an acrylic silicone- or polysiloxane-containing coating composition, a glass, a frit, a glaze, a silica sal, or an alkali silicate, may be polymerized or melted by heat treatment to bond photocatalysts onto one another therethrough to form a skin layer.

Further, the first or sixth humidity-controlling functional material according to the present invention may further comprise, in addition to the aggregate, a photocatalyst which, upon exposure to light, produces active oxygen species through the action of light energy to permit the photocatalyst to function as a catalyst. In the second or seventh humidity-controlling functional material according to the present invention, the matrix may further contain, in addition to the filler, a photocatalyst which, upon exposure to light, produces active oxygen species through the action of light energy to permit the photocatalyst to function as a catalyst. The fifth humidity-controlling functional material according to the present invention may further comprise, in addition to the particles of the material constituting the humidity-controlling functional material per se, a photocatalyst which, upon exposure to light, produces active oxygen species through the action of light energy to permit the photocatalyst to function as a catalyst. The third, fourth, eighth, or ninth humidity-controlling functional material according to the present invention may be such that the surface layer contains a photocatalyst which, upon exposure to light, produces active oxygen species through the action of light energy to permit the photocatalyst to function as a catalyst.

The humidity-controlling functional materials according to these embodiments comprise the photocatalyst together with an aggregate or a filler or the material for constituting the humidity-controlling functional material having the function of controlling the humidity by virtue of the presence of fine pores characteristic of the present invention, or comprise the photocatalyst in the surface layer having the function of controlling the humidity. By virtue of this construction, a high level of humidity-controlling properties can be realized, and, at the same time, this photocatalyst can achieve the environmental preservation and the purification of environment, or the purification of dwelling environment and the comfortable dwelling environment under light irradiation.

In the fifth to ninth humidity-controlling functional materials according to the present invention,

the material particles may be particles of a photocatalyst which, upon exposure to light, produces active oxygen species through the action of light energy to permit the photocatalyst to function as a catalyst.

In the humidity-controlling functional material according to this embodiment, the material per se, which forms fine pores having the function of controlling the humidity, characteristic of the present invention, by gaps among the material particles, is used as the photocatalyst. By virtue of this construction, a high level of humidity-controlling properties can be realized, and, at the same time, this photocatalyst can achieve the environmental preservation and the purification of environment, or the purification of dwelling environment and the comfortable dwelling environment under light irradiation. Further, in this embodiment, the photocatalyst is present over the whole area of the fine pores. This can enhance the conversion of the causative components through the action of the photocatalyst, whereby the environmental preservation and the purification of environment can be more effectively promoted.

Further, in the humidity-controlling functional materials according to the second and third embodiments,

a metal having antimicrobial activity may be fixed on the surface of the skin layer, or
the photocatalyst may have a metal having antimicrobial activity supported on the surface thereof.

In the humidity-controlling functional material according to this embodiment, the metal having antimicrobial activity fixed onto the surface of the skin layer having antimicrobial activity by virtue of the presence of a photocatalyst, or the metal having antimicrobial activity supported on the photocatalyst per se having antimicrobial activity can exhibit antimicrobial activity even in a period, where light is not applied and, hence, the antimicrobial action of the photocatalyst, which can be provided only under light irradiation, cannot be obtained. Therefore, the antimicrobial function of the photocatalyst can be supplemented, and synergistic antimicrobial activity can be realized by the metal having antimicrobial activity and the photocatalyst having antimicrobial activity.

In this case, the metal having antimicrobial activity is preferably a metal having a reduction potential of not less than the potential possessed by free electrons released by the photocatalyst, because this metal can be easily supported on the photocatalyst by taking advantage of the reduction potential of the metal. In this case, the metal is preferably at least one member selected from silver, copper, palladium, iron, nickel, chromium, cobalt, platinum, gold, lithium, calcium, magnesium, aluminum, zinc, rhodium, and ruthenium, because they have the above reduction potential. Silver, copper, palladium, platinum, and gold are particularly preferred because they have a positive reduction potential and hence can easily realize bearing of the metal by reduction. The metal having antimicrobial activity is preferably formulated so as to satisfy a $c/d$ value of about 0.00001 to 0.05 wherein $c$ represents the weight of the metal and $d$ represents the weight of the photocatalyst. That is, when the metal having antimicrobial activity has a $c/d$ value of not less than 0.00001, there is no possibility that the amount of the metal is too small to exhibit synergistic antimicrobial activity, while when the metal having antimicrobial activity has a $c/d$ value of not more than 0.05, there is no possibility that the amount of the metal is excessive and adversely affects the catalytic reaction of the photocatalyst.

According to the present invention, there is provided a process for producing the first humidity-controlling functional material. This production process is a process for producing a humidity-controlling functional material for controlling the humidity through the adsorption of water vapor and the release of water vapor, characterized by comprising the steps of:

mixing fine pore-containing particles with a binder having a melting temperature below the fine pore-containing particles, said fine pore-containing particles containing fine pores having diameters of about 2 to about 20 nm and a fine pore volume of about 0.25 to about 1.2 cc/g;

molding the mixture into a molded product; and

heat-treating the molded product at a temperature below the melting temperature of the fine pore-containing particles and above the melting temperature of the binder.

The production process of the first humidity-controlling functional material having the above constitution according to the present invention can produce a humidity-controlling functional material comprising, as an aggregate, fine pore-containing particles having the function of controlling the humidity by virtue of the presence of specific fine pores, the aggregates being fixed onto one another with a melted binder. According to this production process of the present invention, any special step, different from the conventional steps, except for the mixing of fine pore-containing particles having specific fine pore diameter and fine pore volume into the binder, is not required. Therefore, a humidity-controlling functional material having a high level of humidity-controlling function can be easily produced.

In the production process of the first humidity-controlling functional material according to the present invention,

the step of mixing the fine pore-containing particles with the binder may be the step of mixing about 30 to about 85% by weight of the fine pore-containing particles, about 5 to about 70% by weight of the binder, and optionally not more than about 40% by weight of a plastic component together.

When the amount of the fine pore-containing particles is not less than about 30% by weight, the strength can be maintained while ensuring the lowest tolerable level of the amount of the fine pore-containing particles as the aggregate. On the other hand, when the amount of the fine pore-containing particles is not more than about 85% by weight, the strength is satisfactory. The larger the amount of the tine pore-containing particles incorporated, the better the function of controlling the humidity. Therefore, the use of a large amount of the fine pore-containing particles is preferred. The use of the binder in an amount of not less than about 5% by weight suffices for the fixation of the aggregates onto one another. On the other hand, when the amount of the binder is not more than about 70% by weight, the amount of the aggregate incorporated can be relatively ensured to maintain the strength and to exhibit the function of controlling the humidity. Further, the optional addition of a plastic component into the fine pore-containing particles and the binder followed by mixing is preferred from the viewpoint of imparting the shape retention during molding to ensure the green strength of the molded product. The plastic component may not be added at all, that is, the amount of the plastic component added may be zero% by weight. When the amount of the plastic component added is not more than about 40% by weight, the amount of the aggregate and the amount of the binder incorporated can be relatively ensured to exhibit the retention of the strength and the function of controlling the humidity.

According to the present invention, there is provided a process for producing the second humidity-controlling functional material. This production process is a process for producing a humidity-controlling functional material for controlling the humidity through the adsorption of water vapor and the release of water vapor, characterized by comprising the steps of:

providing a mixture of fine pore-containing particles, containing fine pores having diameters of about 2 to about 20 nm and a fine pore volume of about 0.25 to about 1.2 cc/g, with porous particles which, upon curing, becomes a porous material containing pores having larger diameters than the fine pores; and

shaping the mixture into a shaped article which is then cured.

The production process of the second humidity-controlling functional material having the above constitution according to the present invention can produce, after the shaping and curing of the mixture, a humidity-controlling functional material comprising a matrix of a porous body and, contained in the matrix, a filler of fine pore-containing particles having the function of controlling the humidity by virtue of the presence of specific fine pores . According to this production process of the present invention, any special step, different from the conventional steps, except for the mixing of fine pore-containing particles having specific fine pore diameter and fine pore volume with porous particles, is not required. Therefore, a humidity-controlling functional material having a high level of humidity-controlling function can be easily produced. In this case, a proper method, such as casting, extrusion, or press molding, may be adopted for shaping the mixture.

In the production process of the second humidity-controlling functional material according to the present invention, the step of providing the mixture may be the step of mixing about 3 to about 150 parts by weight of the fine pore-containing particles into 100 parts by weight of the porous particles.

When the amount of the fine pore-containing particles is not less than about 3 parts by weight, the lowest tolerable level of the amount of the fine pore-containing particles as the filler can be ensured to permit the humidity to be controlled by the fine pores in the fine pore-containing particles. On the other hand, the use of the fine pore-containing particles in an amount of not more than about 150 parts by weight suffices for the function of controlling the humidity.

According to the present invention, there is provided a process for producing the third humidity-controlling functional material. This production process is a process for producing a humidity-controlling functional material for controlling the humidity through the adsorption of water vapor and the release of water vapor, characterized by comprising the steps of:

mixing fine pore-containing particles with a binder having a melting temperature below the fine pore-containing particles, said fine pore-containing particles containing fine pores having diameters of about 2 to about 20 nm and a fine pore volume of about 0.25 to about 1.2 cc/g;
covering the surface of a core material with the mixture; and
heat-treating the surface of the core material at a temperature which is below the melting temperature of the fine pore-containing particles, above the melting temperature of the binder, and below the melting temperature of the core material.

The production process of the third humidity-controlling functional material having the above constitution according to the present invention can produce a humidity-controlling functional material comprising a surface layer provided on the surface of a core material, the surface layer containing fine pore-containing particles having the function of controlling the humidity by virtue of the presence of specific fine pores. According to this production process of the present invention, any special step, different from the conventional steps, except for the mixing of fine pore-containing particles having specific fine pore diameter and fine pore volume into the binder, is not required. Therefore, a humidity-controlling functional material having a high level of humidity-controlling function can be easily produced.

In this case, various core materials may be adopted as the core material on which the surface layer is to be formed, so far as they can withstand the melting temperature of the binder. When the core material is earthenware or the like which is to be sintered, the core material before sintering and the surface layer may be simultaneously heat treated to form the humidity-controlling functional material. Alternatively, the surface layer may be formed on the sintered core material.

According to the present invention, there is provided a process for producing the fourth humidity-controlling functional material. This production process is a process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm; and
molding the particles of the sintering material into a molded product which is then sintered,
said sintering being carried out at a temperature regulated so that gaps defined by the adjacent particles of the sintering material are filled with the melt of the sintering material to narrow the gaps to a size of about 2 to about 20 nm.

The production process of the fourth humidity-controlling functional material having the above constitution according to the present invention can produce a humidity-controlling functional material comprising fine pores having a specific diameter serving to perform the adsorption of water vapor and the release of water vapor, the fine pores having been formed by a material constituting the humidity-controlling functional material per se, that is, having been formed by gaps of the sintered material particles. This production process according to the present invention can easily produce a humidity-controlling functional material having a high level of humidity-controlling function through the regulation of the particle diameter of the sintering material and the regulation of the sintering temperature.

According to the present invention, there is provided a process for producing the fifth humidity-controlling functional material. This production process is a process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm;
sintering the particles of the sintering material at a temperature regulated so that gaps defined by the particles of the adjacent sintering material are filled with the melt of the sintering material to narrow the gaps to a size of about 2 to about 20 nm, thereby producing a sinter;
mixing the particles of the sinter thus obtained with a binder having a melting temperature below the particles of the sinter;

molding the mixture into a molded product; and

heat-treating the molded product at a temperature below the melting temperature of the particles of the sinter and above the melting temperature of the binder.

In the production process of the fifth humidity-controlling functional material having the above constitution according to the present invention, a sinter is first produced so that fine pores having a specific diameter, which serve to adsorb and release water vapor, are formed by a material constituting the particles per se of the sinter, that is, by gaps among the sintered material particles. Subsequently, the particles of the sinter, which function to control the humidity by virtue of the presence of the specific fine pores, can be used as aggregates to produce a humidity-controlling functional material wherein the aggregates are fixed onto one another with the aid of a molten binder. According to this production process of the present invention, a humidity-controlling functional material having a high level of humidity-controlling function can be easily produced through the regulation of the particle diameter of the sintered material at the time of the production of the sinter and the regulation of the sintering temperature. In this case, when the particles of the sinter are used as aggregates, if necessary, the sinter may be previously size reduced to particles by means of a suitable grinding device.

According to the present invention, there is provided a process for producing the sixth humidity-controlling functional material. This production process is a process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm;

sintering the particles of the sintering material at a temperature regulated so that gaps defined by the particles of the adjacent sintering material are filled with the melt of the sintering material to narrow the gaps to a size of about 2 to about 20 nm, thereby producing a sinter;

providing a mixture of the particles of the sinter thus obtained with porous particles which, upon curing, becomes a porous material containing pores having larger diameters than said gap size; and

shaping the mixture into a shaped article which is then cured.

Also in the production process of the sixth humidity-controlling functional material having the above constitution according to the present invention, a sinter with fine pores having a specific diameter formed by gaps of the sintered material particles is first produced which function to adsorb and release water vapor. The particles of this sinter can be mixed with porous particles to produce a mixture which is then shaped and cured to produce a humidity-controlling functional material comprising a porous body as a matrix and the particles of the sinter incorporated as a filler into the matrix. Further, this production process according to the present invention can easily produce a humidity-controlling functional material having a high level of humidity-controlling function through the regulation of the particle diameter of the sintering material at the time of the production of the sinter and the regulation of the sintering temperature. In this case, in the provision of the mixture, if necessary, the sinter may be previously size reduced to particles by means of a suitable grinding device. In shaping the mixture, a proper method, such as casting, extrusion, or press molding, may be adopted.

According to the present invention, there is provided a process for producing the seventh humidity-controlling functional material. This production process is a process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm;

sintering the particles of the sintering material at a temperature regulated so that gaps defined by the particles of the adjacent sintering material are filled with the melt of the sintering material to narrow the gaps to a size of about 2 to about 20 nm, thereby producing a sinter;

mixing the particles of the sinter thus obtained with a binder having a melting temperature below the particles of the sinter;

covering the surface of the core material with the mixture; and

heat-treating the surface of the core material at a temperature which is below the melting temperature of the particles of the sinter, above the melting temperature of the binder, and below the melting temperature of the core material.

Also in the production process of the seventh humidity-controlling functional material having the above constitution according to the present invention, a sinter with fine pores having a specific diameter formed by gaps of the sintered material particles is first produced which function to adsorb and release water vapor. Next, a surface layer comprising particles of this sinter fixed onto one another with the aid of a binder is formed on the surface of a core material. Thus, a humidity-controlling functional material can be produced which comprises a surface layer provided on the surface of a core material, the surface layer containing particles of a sinter. This production process according to the present invention can easily produce a humidity-controlling functional material having a high level of humidity-controlling function through the regulation of the particle diameter of the sintering material at the time of the production of the sinter and the regulation of the sintering temperature. In this case, in mixing the particles of the sinter with the binder, if necessary, the sinter may be previously size reduced to particles by means of a suitable grinding device.

In this case, various core materials may be adopted as the core material on which the surface layer is to be formed, so far as they can withstand the melting temperature of the binder. When the core material is earthenware or the like which is to be sintered, the core material before sintering and the surface layer may be simultaneously heat treated to form the humidity-controlling functional material. Alternatively, the surface layer may be formed on the sintered core material.

The above production processes of the first to seventh humidity-controlling functional materials according to the present invention, or the above embodiments thereof

may further comprise the step of coating a sol solution of a photocatalyst which, upon exposure to light, produces active oxygen species through the action of light energy to permit the photocatalyst to function as a catalyst, onto the surface of the humidity-controlling functional material, and removing a solvent component in the sol solution to form a porous skin layer containing the photocatalyst, or
may further comprise the step of coating a mixed solution composed of this photocatalyst and a binder for bonding of the photocatalyst, onto the surface of the humidity-controlling functional material, and removing a solvent component in the mixed solution and, at the same time, melting the binder to form a porous skin layer comprising the photocatalyst bonded with the binder.

According to the production processes in these embodiments, a skin layer is formed on the humidity-controlling functional material which functions to control the humidity by virtue of the presence of fine pores characteristic of the present invention. Therefore, a humidity-controlling functional material can be easily produced which, in addition to the function of controlling the humidity, can provide new functions through the photocatalyst in the skin layer, that is, the function of removing the above causative components and the antimicrobial function. In this case, in mixing the photocatalyst with the binder, if necessary, the water content may be properly regulated. The skin layer becomes porous upon heating to remove the solvent component. When surely rendering the skin layer porous with higher reliability is contemplated, fine particles (particle diameter: about 0.01 to about 200 µm), which are burned down when the solvent component is heated, may be incorporated together with the photocatalyst.

The production processes according to these embodiments

may further comprise, subsequent to the step of forming the skin layer, the step of coating an aqueous metal salt solution containing ions of a metal having antimicrobial activity on the surface of the formed skin layer and the step of irradiating the skin layer with ultraviolet light to photoreduce the metal ions on the photocatalyst, thereby supporting and fixing the metal on the photocatalyst in the skin layer, or
may be such that the step of forming the skin layer comprises
the step of providing a photocatalyst dispersed sol containing the photocatalyst dispersed therein, and
the step of mixing an aqueous metal salt solution containing ions of a metal having antimicrobial activity into the photocatalyst dispersed sol and producing the photocatalyst with the metal supported thereon.

In the production processes according to these embodiments, a metal having antimicrobial activity is supported on the photocatalyst for the formation of the skin layer which can newly exhibit the function of removing the causative components and the antimicrobial function. Therefore, a humidity-controlling functional material can be easily produced which has a skin layer capable of compensating for the antimicrobial function provided by the photocatalyst, thereby realizing synergistic antimicrobial activity. In this case, bearing of the metal having antimicrobial activity on the photocatalyst by using a photocatalyst dispersed sol is more preferred, because the antimicrobial function can also be compensated for by the metal within the pores in the skin layer.

In the production process of the first or third humidity-controlling functional material according to the present invention,

the step of mixing the fine pore-containing particles with the binder may be the step of mixing, in addition to the fine pore-containing particles and the binder, a photocatalyst which upon exposure to light produces active oxygen species through the action of light energy to permit the photocatalyst to function as a catalyst.

In the production process according to this embodiment, a photocatalyst is bonded through the binder to fine pore-containing particles which can function to control the humidity by virtue of the presence of fine pores characteristic of the present invention. Therefore, a humidity-controlling functional material can be easily produced which, in addition to the function of controlling the humidity, can provide new functions through the bonded photocatalyst, that is, the function of removing the above causative components and the antimicrobial function. In this case, the photocatalyst is present around the fine pores which function to adsorb the causative components. Therefore, the function of removing the causative components can be enhanced, and, at the same time, the antimicrobial function can be advantageously exhibited within the fine pores.

In the production process according to this embodiment,

the step of mixing the photocatalyst in addition to the fine pore-containing particles and the binder may comprise the step of providing a photocatalyst dispersed sol containing the photocatalyst dispersed therein, and
the step of mixing an aqueous metal salt solution containing ions of a metal having antimicrobial activity into the photocatalyst dispersed sol and producing the photocatalyst with the metal supported thereon.

In the production process according to this embodiment, a photocatalyst with the antimicrobial metal supported thereon is bonded through a binder to the fine pore-containing particles which function to control the humidity by virtue of the presence of fine pores characteristic of the present invention. Therefore, a humidity-controlling functional material can be easily produced which, in addition to the humidity-controlling function and the function of removing the causative components and the antimicrobial function by the photocatalyst, permits the antimicrobial function provided by the photocatalyst to be compensated for by the antimicrobial metal, whereby the humidity-controlling functional material can exhibit synergistic antimicrobial activity. In addition, since the antimicrobial metal is supported on the photocatalyst bonded to the fine pore-containing particles, the antimicrobial metal is present around the fine pores, thus permitting the antimicrobial function to also be more advantageously compensated for by the metal within the fine pores characteristic of the present invention.

In the production process of the second humidity-controlling functional material according to the present invention,

the step of providing the mixture of the fine pore-containing particles with the porous particles may be the step of providing a mixture of the fine pore-containing particles and the porous particles with a photocatalyst which, upon exposure to light, produces active oxygen species through the action of light energy to permit the photocatalyst to function as a catalyst.

In the production process according to this embodiment, fine pore-containing particles, which function to control the humidity by virtue of the presence of fine pores characteristic of the present invention, and a photocatalyst are incorporated as fillers into a matrix of a porous body. Therefore, a humidity-controlling functional material can be easily produced which, in addition to the function of controlling the humidity, can newly provide functions through the photocatalyst added as a filler, that is, the function of removing the above causative components and the antimicrobial function. In this case, the photocatalyst is present around the fine pores serving to adsorb the causative components. This can advantageously enhance the function of removing the causative components, and, at the same time, can exhibit the antimicrobial function within the fine pores.

In the production process according to this embodiment,

the step of providing a mixture of the fine pore-containing particles and the porous particles with the photocatalyst may comprise
the step of mixing an aqueous metal salt solution containing ions of a metal having antimicrobial activity into the photocatalyst dispersed sol and producing the photocatalyst with the metal supported thereon.

In the production process according to this embodiment, fine pore-containing particles, which function to control the humidity by virtue of the presence of fine pores characteristic of the present invention, and a photocatalyst with an antimicrobial metal supported thereon are incorporated as fillers into a matrix of a porous body. Therefore, a humidity-controlling functional material can be easily produced which, in addition to the humidity-controlling function and the function of removing the causative components and the antimicrobial function provided by the photocatalyst, can exhibit synergistic antimicrobial activity through the compensation of the antimicrobial function of the photocatalyst by the antimicrobial metal.

In the production processes of the fourth to seventh humidity-controlling functional materials according to the present invention,

the step of providing the sintering material through the regulation of particle diameters may be the step of providing as the sintering material a photocatalyst which, upon exposure to light, produces active oxygen species through the action of light energy to permit the photocatalyst to function as a catalyst.

In the production process according to this embodiment, the characteristic fine pores, which function to control the humidity, are formed by the photocatalyst per se Therefore, a humidity-controlling functional material can be easily produced which, in addition to the function of controlling the humidity, can provide new functions, that is, the function of removing the causative components and the antimicrobial function. In this case, the photocatalyst forms fine pores which function to adsorb the causative components. Therefore, the function of removing the causative components can be enhanced, and, at the same time, the antimicrobial function can be advantageously exhibited within the fine pores.

In the production process according to this embodiment,

the step of providing as the sintering material the photocatalyst through the regulation of particle diameters may comprise
the step of mixing an aqueous metal salt solution containing ions of a metal having antimicrobial activity into the photocatalyst dispersed sol and producing the photocatalyst with the metal supported thereon.

In the production process according to this embodiment, a photocatalyst with an antimicrobial metal supported thereon is used as the photocatalyst for providing characteristic fine pores which function to control the humidity. Therefore, a humidity-controlling functional material can be easily produced which, in addition to the humidity-controlling function and the function of removing the causative components and the antimicrobial function provided by the photocatalyst, can exhibit synergistic antimicrobial activity through the compensation of the antimicrobial function of the photocatalyst by the antimicrobial metal. Moreover, since the photocatalyst for providing fine pores bears thereon an antimicrobial metal, the antimicrobial metal is present around the fine pores. This is more advantageous in that the antimicrobial function can also be compensated for within the fine pores characteristic of the present invention.

In the production process involving the step of producing the photocatalyst with the metal supported thereon, among the production processes according to the above embodiments,

the step of producing the photocatalyst with the metal supported thereon may comprise
the step of mixing an aqueous metal salt solution containing ions of a metal having antimicrobial activity into the photocatalyst dispersed sol and then irradiating the mixture with ultraviolet light, whereby the metal is supported on the photocatalyst through the photoreduction of the metal ions, or
the step of mixing an aqueous metal salt solution containing ions of a metal having antimicrobial activity into the photocatalyst dispersed sol and then coprecipitating the metal salt and the photocatalyst, whereby the metal is supported on the photocatalyst.

In the production processes according to these embodiments, photoreduction or coprecipitation is utilized in previously supporting the metal for compensating for the antimicrobial function on the photocatalyst. Therefore, the separation of the metal from the photocatalyst is less likely to occur, and, thus, the function of compensating for the antimicrobial function can be maintained for a long period of time. Further, in the production process wherein photoreduction is utilized to support the metal, what is required for supporting the metal is only to apply ultraviolet light, and, in this case, the use of any chemical or the like is not required at all. This can simplify the process.

In the present invention, the following other embodiment may also be adopted. Specifically, according to the first other embodiment, there is provided a process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm; and
dispersing and incorporating the sintering material in a pore-forming material, which becomes porous upon sintering, so that the sintering material functions as a filler, and then sintering the sintering material together with the pore-forming material at a temperature regulated so that the size of gaps among the particles after bonding through the sintering is about 2 to about 20 nm.

The production process according to the first other embodiment can produce a humidity-controlling functional material comprising a matrix of a porous body formed of a sintered pore-forming material and, incorporated therein, a sintered material as a filler which exhibits the humidity-controlling function by virtue of the presence of specific fine pores formed by gaps among adjacent particles through the sintering. The production process according to this embodiment can easily produce a humidity-controlling functional material having a high level of humidity-controlling function through the dispersion and incorporation of the sintering material, regulated to suitable particle diameters, as the filler followed by sintering. In this case, pore-forming materials usable herein include materials for tiles and earthenware produced through sintering.

BRIEF DESCRIPTION OF THE DRAWINGS

Fig. 1 is a schematic diagram showing porous silica particles having specific fine pores which function to control the humidity through the adsorption of water vapor and the release of water vapor;

Fig. 2 is a schematic diagram showing a porous body of alumina having specific fine pores, defined by gaps among material particles, which function to control the humidity through the adsorption of water vapor and the release of water vapor;

Fig. 3 is a schematic diagram showing the structure of the humidity-controlling functional material prepared in Example 1, wherein porous alumina particles having specific fine pores were used as an aggregate;

Fig. 4 is a graph showing the relationship between the relative humidity and the equilibrium moisture content, for the humidity-controlling tile prepared in Example 1 wherein porous alumina particles having specific fine pores as an aggregate have been fixed onto one another, in comparison with a diatomaceous earth tile corresponding to a conventional humidity-controlling tile;

Fig. 5 is a graph showing the relationship between the bending strength and the humidity-controlling property value, for the humidity-controlling tile prepared in Example 1, in comparison with a diatomaceous earth tile and a zeolite tile corresponding to conventional humidity-controlling tiles;

Fig. 6 is a graph showing the relationship between the humidity-controlling property value and the aggregate-mixing ratio, for the humidity-controlling tile prepared in Example 1;

Fig. 7 is a schematic diagram showing the structure of the humidity-controlling functional material prepared in Example 2, wherein porous alumina particles having specific fine pores were used as a filler;

Fig. 8 is a schematic diagram showing the structure of the humidity-controlling functional material according to the first variant, comprising a surface layer and a core material onto which the surface layer has been fixed, the surface layer comprising porous alumina particles having specific fine pores which have been fixed onto one another with the aid of a binder;

Fig. 9 is a graph showing the relationship between the relative humidity and the equilibrium moisture content for each sintering temperature, for the humidity-controlling tile prepared in Example 3 comprising a porous body of alumina having specific fine pores defined by gaps among particles;

Fig. 10 is a graph showing the relationship between the firing temperature and the humidity-controlling property value as a measure of the level of the function of controlling the humidity, for the humidity-controlling tile prepared in Example 3;

Fig. 11 is a graph showing the relationship between the firing temperature and the humidity-controlling property value as a measure of the level of the function of controlling the humidity, for each humidity-controlling tile prepared in Example 4 comprising a porous body of titania having specific fine pores defined by gaps among particles;

Fig. 12 is a graph showing the relationship between the relative humidity and the equilibrium moisture content, for the humidity-controlling tiles prepared in Examples 5 to 7 using a porous body of alumina having specific fine pores defined by gaps among particles;

Fig. 13 is a schematic diagram showing the construction of a testing apparatus used in the measurement of the effect of reducing nitrogen oxides attained by the tile prepared in an example of the present invention (Example 8); and

Fig. 14 is a graph showing the results of an experiment on the effect of reducing nitrogen oxides attained by the tile prepared in an example of the present invention (Example 8).

BEST MODE FOR CARRYING OUT THE INVENTION

Next, embodiments of the present invention will be described with reference to the following examples. Humidity-controlling functional materials having the function of controlling the humidity will be first described. These humidity-controlling functional materials are roughly classified into those in the form of particles which per se have specific fine pores, and those in the form of an aggregate of material particles, the aggregate having specific fine pores defined by gaps among the material particles.

① Humidity-controlling functional material in the form of particles which per se have specific fine pores:

Silica was selected as a material to be used, and silica particles having specific fine pores (porous silica particles) were produced through the following steps.

A phyllosilicate was first provided. The phyllosilicate was mixed with a surfactant. The silicate was then polymerized by a hydrothermal reaction to prepare a polymer which was then heat treated at about 600°C and size reduced by a suitable grinding machine to prepare particles. The surfactant was burned out by the heat treatment, and sites, where the surfactant was present before the heat treatment and was burned out by the heat treatment, became fine pores. In this case, the surfactant was used as a mold for fine pores, and fine pores were formed by burning out the surfactant. The particles thus obtained are porous silica particles having specific fine pores.

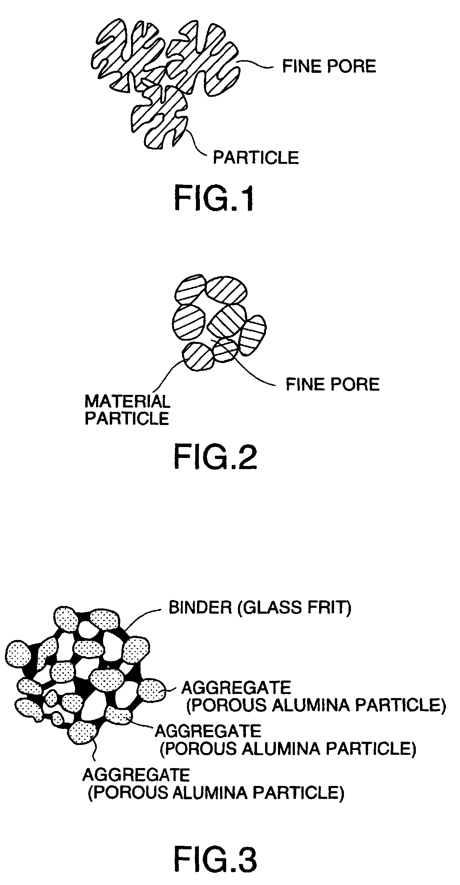

The porous silica particles were investigated for the formed fine pores. As a result, it was found that, as schematically shown in Fig. 1, numerous fine pores were present in a region from the surface to the interior of the particles. The porous silica particles had a fine pore diameter of about 3 to 4 nm and a fine pore volume of about 0.7 cc/g. The surface and section of the porous silica particles were observed under an optical microscope to respectively investigate the distribution of fine pores present on the surface of porous silica particles and the formation of fine pores within the porous silica particles. The fine pore diameter and the fine pore volume were measured with a nitrogen gas absorption type fine pore distribution measuring apparatus. Particles produced as described above were used for this measurement. In this connection, it should be noted that the fine pore diameter and the fine pore volume can be, of course, measured on a roughly ground product of a molded product produced from the porous silica particles.

Also for alumina, alumina particles having specific fine pores (porous alumina particles) were produced. The porous alumina particles were produced as follows. A kaolin clay mineral was first heat treated at about 1,000°C, and then treated with potassium hydroxide as an alkali. During the heat treatment, amorphous silica was formed by phase separation from the kaolin clay mineral. The phase separated amorphous silica was melted and removed by the alkali treatment after the heat treatment. Therefore, sites, where the amorphous silica was present before the alkali treatment and was removed by the alkali treatment, became fine pores. In this case, before and after the removal of the amorphous silica, size reduction to particles may be carried out by means of a suitable grinding machine. The particles thus obtained were porous alumina particles having specific fine pores.

The porous alumina particles were also examined for the formation of fine pores in the same manner as used in the porous silica particles. As a result, it was found that numerous fine pores were present in a region from the surface to the interior of the particles. The porous silica particles had a fine pore diameter of about 3 to 8 nm and a fine pore volume of about 0.4 cc/g.

② Humidity-controlling functional material in the form of aggregate of material particles, the aggregate having specific fine pores defined by gaps among the material particles:

Alumina and titania were selected as materials used, and porous bodies (porous body of alumina and porous body of titania) having specific fine pores defined by gaps among material particles were produced through the following steps.

An alumina sol with alumina particles dispersed therein and a titania sol with titania particles dispersed therein were first provided. They were dried and size reduced to powders. Thus, alumina particles and titania particles were obtained. In this case, the particles were regulated to an average particle diameter of about 7 to about 100 nm. The particles thus obtained were molded into a suitable shape. For example, the particles are molded by means of a mold into a button which is then sintered. For the alumina particles, sintering was carried out at about 700 to 1,000°C to produce an alumina sinter, while for titania particles, sintering was carried out at about 700 to 850°C to produce a titania sinter. These sinters were size reduced to particles which were then examined for the formation of fine pores. As a result, numerous fine pores were present from the surface to the interior of the particles, and it was confirmed that these sinters were porous bodies (porous body of alumina and porous body of titania). For the porous body of alumina, the fine pore diameter was about 2 to 10 nm, while for the porous body of titania, the fine pore diameter was about 6 to 20 nm. Moreover, as schematically shown in Fig. 2, the fine pores in these porous bodies were such that the material particles (alumina particles, titania particles) constituting the porous body per se had been sintered to bond adjacent particles to one another so that the size of gaps among particles after bonding was about 2 to about 20 nm in terms of the spreading (diameter). Since the size reduced particles are the above porous bodies, the sinters of molded products produced from these size reduced particles are, of course, nothing but porous bodies (porous body of alumina, porous body of titania) having fine pores defined by gaps among the material particles.

Next, humidity-controlling functional materials using ① the porous silica particles and the porous alumina particles and ② the porous body of alumina and the porous body of titania will be described.

Example 1:

Porous alumina particles as an aggregate of a humidity-controlling functional material (fine pore diameter = about 3 to 8 nm, fine pore volume = about 0.4 cc/g) (70% by weight), 20% by weight of a glass frit as a binder, and 10% by weight of clay as a plastic component were first provided and mixed together to prepare a mixture. In mixing them, if necessary, the water content is suitably regulated, that is, to prepare a slurry or a granular powder for molding. Next, the slurry or the granular powder was press molded into a suitable shape, for example, a tile. This molded product was fired at a temperature below the melting temperature of alumina (porous alumina particles) and above the melting temperature of the binder (glass frit), that is, at about 850°C in the case of this example. As schematically shown in Fig. 3, a humidity-controlling functional material in a tile form comprising porous alumina particles having specific fine pores as aggregates fixed onto one another through a molten glass frit, that is, a humidity-controlling tile, could be produced through the above steps. In this humidity-controlling tile (a humidity-controlling functional material), as shown in Fig. 1, individual porous alumina particles as aggregates are particles having specific fine pores, and adjacent porous alumina particles are fixed onto one another through a glass frit.

The porous alumina particles can withstand a temperature of 900°C or above, and the glass frit as the binder is melted at about 800°C and softened. The clay is mixed to ensure the green strength of the press molded product. The mixing of the clay may be omitted.

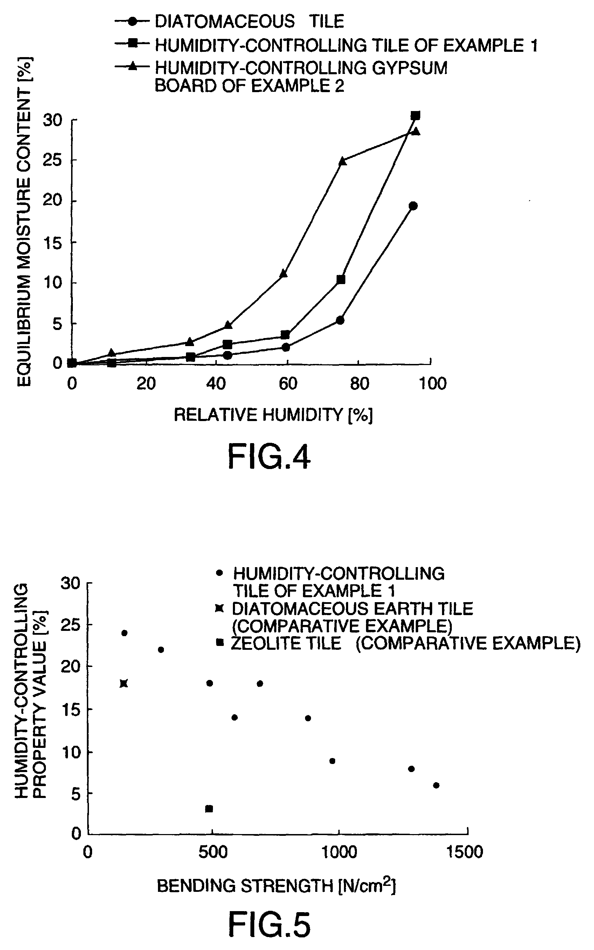

Next, the humidity-controlling tile was placed under an environment of temperature about 20°C and relative humidity 10 to 95%, and the equilibrium moisture content (%) at indicated relative humidities were measured using a saturated aqueous salt solution specified in JIS Z 8806 according to the testing method (cup method) specified in JIS A 1324. The results were plotted for each relative humidity, and are shown in Fig. 4.

A humidity-controlling tile (a diatomaceous earth tile) as a comparative tile for evaluation of the humidity-controlling tile of this example was also measured for the equilibrium moisture content. The results are also shown in Fig. 4. This diatomaceous earth tile corresponds to the conventional humidity-controlling tile proposed in Japanese Patent Laid-open No. 354514/1992. In this case, in the humidity-controlling tile of the example, diatomaceous earth was used instead of the porous alumina particles, and the diatomaceous earth only was press molded, followed by firing of the molded product at about 800°C to prepare the diatomaceous earth tile.

As can be seen from Fig. 4, in the humidity-controlling tile of Example 1, after the relative humidity reached 60%, the equilibrium moisture content increased with increasing the relative humidity. The degree of the increase is larger than that in the case of the diatomaceous earth tile. In the humidity-controlling tile of Example 1, the equilibrium moisture content was found to be higher than the diatomaceous earth tile as a whole. Therefore, according to the humidity-controlling tile of Example 1, when the relative humidity exceeded 60%, water vapor was efficiently adsorbed by virtue of the high equilibrium moisture content. On the other hand, when the relative humidity became less than 60%, the equilibrium moisture content was decreased to efficiently release the adsorbed water vapor. Thus, the function of controlling the humidity on a high level could be provided through the adsorption and release. Further, by virtue of the difference in equilibrium moisture content, the function of controlling the humidity for the humidity-controlling tile of Example 1 was superior to that for the diatomaceous earth tile corresponding to the conventional humidity-controlling tile.

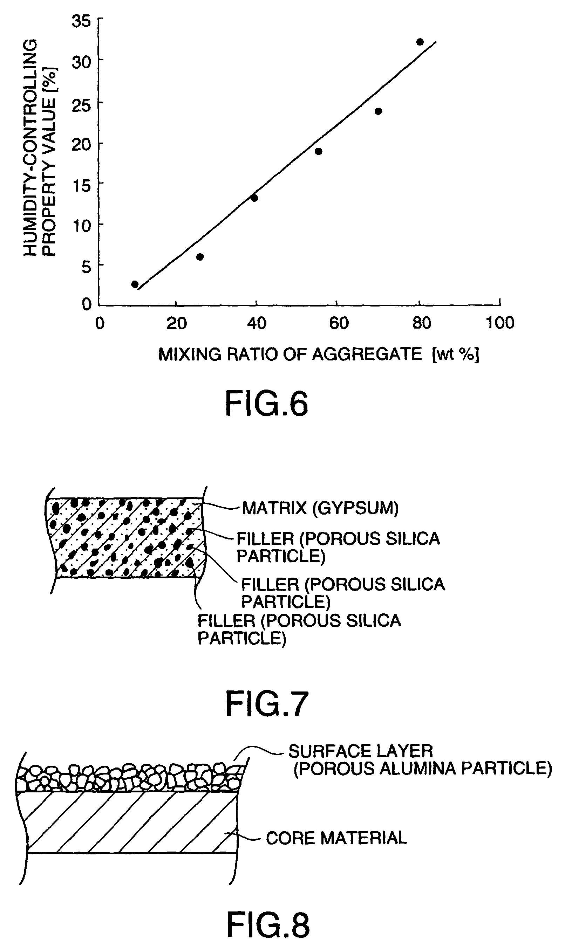

The humidity-controlling tile of Example 1 was investigated for properties, that is, bending strength and humidity-controlling property value as a measure of the level of the function of controlling the humidity. In this case, the difference between the equilibrium moisture content at a relative humidity of 95% and the equilibrium moisture content at a relative humidity of 43% as measured under an environment having a temperature of about 20°C was used as the humidity-controlling property value (%). In the investigation, the above type of humidity-controlling tiles having different mixing ratios of the aggregate (porous alumina particles) were produced, and were measured for the bending strength and the humidity-controlling property. The relationship between the bending strength and the humidity-controlling property value is shown in Fig. 5, while the relationship between the humidity-controlling property value and the mixing ratio of the aggregate is shown in Fig. 6. In this case, the bending strength was measured according to the bending testing method specified in JIS A 5209, and the bending strength value was calculated according to the calculation formula of bending strength specified in JIS R 2213. The above diatomaceous earth tile produced by press molding diatomaceous earth only and a zeolite tile produced from zeolite were provided as comparative tiles. These comparative tiles were also measured for the bending strength and the humidity-controlling property value. The results for these comparative tiles are shown in Fig. 5.

Fig. 5 shows that, for the humidity-controlling tiles of Example 1, the humidity-controlling property decreases with increasing the bending strength. For the humidity-controlling property, the humidity-controlling tiles of Example 1 were superior to the comparative zeolite tile, and some of the humidity-controlling tiles of Example 1 were superior to the comparative diatomaceous earth tile. For the bending strength, the humidity-controlling tiles of Example 1 were superior to the diatomaceous earth tile, and some of the humidity-controlling tiles of Example 1 were superior to the zeolite tile. On the other hand, as can be seen from Fig. 6, it was found that, for the humidity-controlling tiles of Example 1, a higher level of humidity-controlling property can be provided by increasing the mixing ratio of the aggregate.

The results shown in Figs. 5 and 6 demonstrate that, when the tile has a humidity-controlling property value of not less than about 5 (%) under an environment having a temperature of about 20°C, the tile can exhibit a higher level of the function of controlling the humidity than the zeolite tile corresponding to the conventional humidity-controlling tile, and can provide comfort dwelling environment from the viewpoint of humidity by virtue of the high level of the function of controlling the humidity through the adsorption and release of water vapor. The tiles of the example having a humidity-controlling property inferior to the diatomaceous earth tile in the humidity-controlling property value have the following advantage. The bending strength of the diatomaceous earth tile is as low as about 100 N/cm$^2$. On the other hand, the tiles of the example having a humidity-controlling property value lower than the diatomaceous earth tile had higher bending strength than the diatomaceous earth tile.

The tiles of the example having a bending strength substantially equal to the bending strength (about 100 N/cm$^2$) of the diatomaceous earth tile had a higher humidity-controlling property than the diatomaceous earth tile. Further, the tiles of the example having a humidity-controlling property value of not less than about 10 (%) and a bending strength of not less than 500 N/cm$^2$ under an environment having a temperature of about 20°C are preferred, because, in this case, there is no problem in the development of products, such as building materials, from the viewpoint of the humidity-controlling properties, as well as from the viewpoint of strength. Further, for the humidity-controlling tiles of Example 1 comprising aggregates fixed onto one another through a binder and having the above bending strength and humidity-controlling property value, a mixing ratio of the porous alumina particles as the aggregate of not more than about 60% by weight suffices for the contemplated results. Therefore, a high level of humidity-controlling property and a high level of bending strength can be advantageously realized while reducing the amount of use of the porous alumina particles.

Example 2:

Porous silica particles as a filler in a humidity-controlling functional material (fine pore diameter = about 3 to 4 nm, fine pore volume = about 0.7 cc/g) (40 parts by weight) and 60 parts by weight of gypsum as a matrix in the humidity-controlling functional material were provided, and mixed together to prepare a mixture. The water content was then suitably regulated, and the mixture was then kneaded. The kneaded product was poured into a mold for molding a board, and molded into a board, followed by drying and standing for a predetermined period of time. During the standing, water was removed to cure the gypsum. Thus, as schematically shown in Fig. 7, a humidity-controlling functional material comprising porous silica particles having specific fine pores incorporated as a filler into a matrix of gypsum, that is, a humidity-controlling gypsum board, could be produced through the above steps. In this humidity-controlling gypsum board, as shown in Fig. 1, individual porous silica particles as the filler are particles having specific fine pores. In this case, the cured gypsum became a porous material having pores having a size of not less than 100 nm which is much larger than the size of the fine pores of the porous silica particles. This permits water vapor to reach the fine pores in the porous silica particles as the filler through the pores of the gypsum.

Next, as with the humidity-controlling tiles of Example 1, the humidity-controlling gypsum board thus obtained was placed under an environment of temperature about 20°C and relative humidity 10 to 95%, and the equilibrium moisture content (%) at indicated relative humidities were measured. The results were plotted for each relative humidity, and are also shown in Fig. 4.

From Fig. 4, it was found that, in the humidity-controlling gypsum board of Example 2, after the relative humidity reached 40%, the equilibrium moisture content rapidly increased with increasing the relative humidity and the equilibrium moisture content was high as a whole over the relative humidities. Therefore, according to the humidity-controlling gypsum board of Example 2, when the relative humidity exceeded 40%, water vapor was efficiently adsorbed by virtue of the high equilibrium moisture content, while when the relative humidity became less than 40%, the equilibrium moisture content was decreased to efficiently release the adsorbed water vapor. Thus, the function of controlling the humidity on a high level could be provided through the adsorption and release. In particular, since the degree of increase in the equilibrium moisture content further increases after the relative humidity reached 60%, the high humidity environment can be rapidly brought to low humidity environment. Incidentally, as described in Example 1, the replacement of diatomaceous earth with the porous alumina particles having specific fine pores enhanced the function of controlling the humidity. Therefore, it is a matter of course that the humidity-controlling gypsum board of Example 2 is also superior in the function of controlling the humidity to the humidity-controlling gypsum board containing diatomaceous earth as the filler instead of the porous silica particles.

In the humidity-controlling tiles and the humidity-controlling gypsum boards of Examples 1 and 2, the porous alumina particles and the porous silica particles had the function of controlling the humidity. Variants using the porous alumina particles and the porous silica particles will be described. The first variant is such that the surface layer formed on the surface of the core material exhibits the function of controlling the humidity. Specifically, the porous alumina particles noted above was provided as a material for the surface layer, and a glass frit was provided as a binder for fixing the porous alumina particles onto the surface of the core material. The porous alumina particles and the glass frit were mixed together to prepare a mixture which was then regulated to a suitable water content to prepare a slurry. The slurry was coated onto the surface of a high-melting core material (for example, an aluminum plate). The surface of the core material was heat treated at a temperature of about 850°C. Thus, as schematically shown in Fig. 8, a humidity-controlling functional material comprising a surface layer and a core material having the surface layer fixed onto the surface thereof, the surface layer comprising porous alumina particles having specific fine pores fixed onto one another through a binder, could be produced through the above steps. In this humidity-controlling functional material, the porous alumina particles constituting the surface layer had the function of controlling the humidity, and the ability of the functional material to control the humidity was approximately equal to that for the humidity-controlling functional material of Example 1 (humidity-controlling tile).

In the humidity-controlling functional material according to this first variant, the surface layer containing porous alumina particles may be formed on the surface of the core material. Therefore, the function of controlling the humidity can be additionally provided later. The humidity-controlling functional material can be preferably used in the following applications. Specifically, the surface layer containing porous alumina particles is formed, in the same manner as described above, on the inner surface of storage boxes or storage rooms for articles such as books and postage stamps, furniture and furs, clothes or costumes and textiles, or curios, pictures and other art objects, and, in addition, musical instruments, such as pianos and violins. In this case, in the storage boxes and warehouses, the surface layer functions to maintain the interior thereof at a relative humidity of about 40 to about 70%. Therefore, the above-described various articles can be placed under an environment having a humidity suitable for storage. In this case, since air conditioning is not required, these articles can be advantageously stored simply and inexpensively. The formation of the surface layer on the inner surface of the existing storage boxes and storage warehouses can realize effective utilization of the existing storage boxes and storage warehouses.

According to the second variant, the porous silica particles were mixed as a filler into gypsum as a matrix, and the mixture was regulated to a suitable water content, followed by kneading to prepare a kneaded product which was then coated on the surface of a suitable core material (for example, a building material such as wood, resin, metal, or glass). The coated core material was dried and allowed to stand for a predetermined period of time, during which time water was removed to cure the gypsum. Thus, a humidity-controlling functional material comprising a surface layer provided on the surface of a core material, the surface layer comprising porous silica particles having specific fine pores incorporated as a filler into a matrix of gypsum, could be produced through the above steps. In this humidity-controlling functional material, the porous silica particles contained as the filler in the surface layer had the function of controlling the humidity, and the ability of the functional material to control the humidity was approximately equal to that for the humidity-controlling functional material (humidity-controlling gypsum board) of Example 2.

Next, examples using porous bodies (porous body of alumina, porous body of titania) having fine pores having a diameter of about 2 to about 20 nm defined by gaps among material particles will be described.

Example 3:

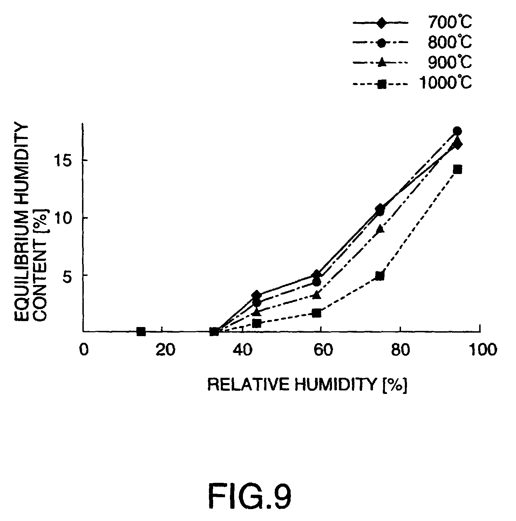

Alumina particles regulated through drying of an alumina sol to an average particle diameter of about 7 to about 100 nm in the same manner described above was first molded into a tile which was then sintered at about 700 to 1,000°C to produce an alumina sinter. As described above, the aluminum sinter thus obtained was a porous body (porous body of alumina) with fine pores having a diameter of about 2 to about 20 nm defined by gaps among the particles (see Fig. 2), and, in this example, was a humidity-controlling functional material (a humidity-controlling tile) as a final product. The humidity-controlling functional tile of Example 3 also was measured for the equilibrium moisture content (%) under an environment having a relative humidity of 10 to 95%. The results are plotted for each relative humidity, and shown in Fig. 9. In the drawing, the sintering temperature used in the production of the humidity-controlling tiles is also shown.

As can be seen from Fig. 9, for all the humidity-controlling tiles of Example 3 which were sintered at indicated temperatures, the equilibrium moisture content increased after the relative humidity reached 60%. Further, it was found that a lower sistering temperature provides a higher equilibrium moisture content as a whole. Therefore, for all the test products, when the relative humidity exceeded 60%, water vapor was adsorbed by virtue of the high equilibrium moisture content, while when the relative humidity became less than 60%, the equilibrium moisture content was decreased to release the adsorbed water vapor. Thus, the function of controlling the humidity on a high level could be provided through the adsorption and release. For all the humidity-controlling tiles, the equilibrium moisture content was substantially 0% at a relative humidity of 10% and a relative humidity of 35%.

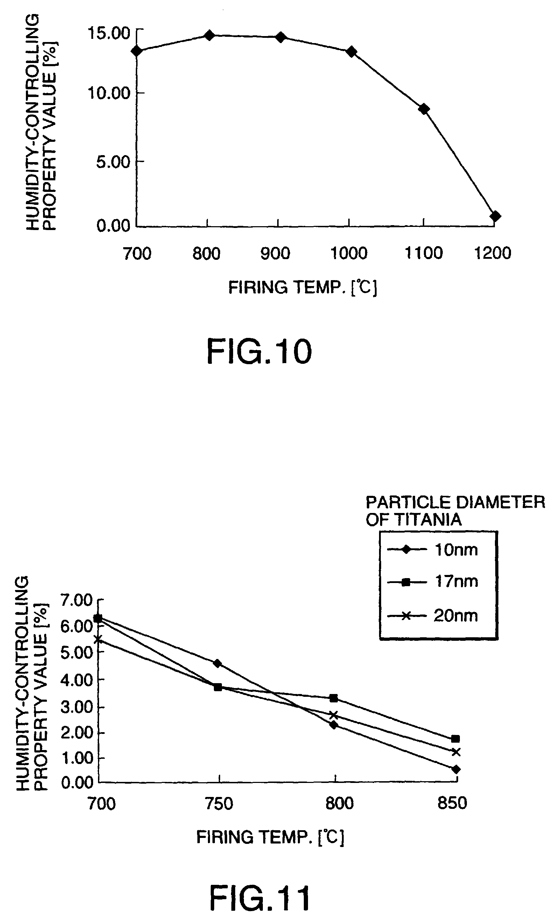

Next, for the humidity-controlling tiles of Example 3, the influence of firing temperature was investigated. In the investigation, the above humidity-controlling tiles were produced at various sintering temperatures. For the humidity-controlling tiles, the relationship between the relative humidity and the equilibrium moisture content were determined. The humidity-controlling property value as a measure of the level of the function of controlling the humidity was plotted for each sintering temperature. The results are shown in Fig. 10. From Fig. 10, it is apparent that sintering of a press molded product, produced from an alumina sol, at about 700 to 1,100°C can provide a very large humidity-controlling property value and thus can realize a high level of the function of controlling the humidity. These temperatures are below sintering temperatures commonly used in sintering alumina to prepare substrates or the like. In this case, the reason why the humidity-controlling property value lowers with increasing the sintering temperature is believed as follows. The first possible reason is that, upon sintering at a high sintering temperature, melting and bonding of particles proceed to cause disappearance of gaps among the particles or causes the size of the gaps to be reduced to less than 2 rim, resulting in lowered humidity-controlling function. The second possible reason is that the growth of particles with the progress of the sintering increases the particle-to-particle distance to more than 20 nm to lower the function of controlling the humidity.

Example 4:

Various titania particles regulated through drying of a titania sol to an average particle diameter of about 7 to about 100 nm in the same manner as described above was first molded into tiles which were then sintered at about 700 to 850°C to produce titania sinters. As with the sinters produced in Example 3, the titania sinters thus obtained each were a porous body with fine pores having a diameter of about 2 to about 20 nm defined by gaps among the particles (see Fig. 2), and were also humidity-controlling functional materials (humidity-controlling tiles) as a final product.

Next, the humidity-controlling tiles were investigated for the properties. The results are shown in Table 2. The properties were investigated as a function of particle diameter and firing temperature of titania in the titania sols used in the production of titania sinters.

Table 2

| Particle diameter of titania, nm | Firing temp., °C | Apparent specific gravity | Bulk specific gravity | Apparent porosity, % | Water absorption, % |
|---|---|---|---|---|---|
| 10 | 700 | 3.63 | 2.09 | 42.43 | 20.30 |
|    | 750 | 3.77 | 2.36 | 37.47 | 15.88 |
|    | 800 | 3.84 | 2.60 | 32.40 | 12.47 |
|    | 850 | 3.73 | 3.01 | 19.39 | 6.44 |
| 7  | 700 | 3.64 | 2.05 | 43.78 | 21.40 |
|    | 750 | 3.73 | 2.32 | 37.86 | 16.34 |
|    | 800 | 3.77 | 2.51 | 33.63 | 13.42 |
|    | 850 | 3.90 | 2.93 | 24.95 | 8.53 |
| 20 | 700 | 3.67 | 2.13 | 41.88 | 19.64 |
|    | 750 | 3.72 | 2.29 | 38.35 | 16.72 |
|    | 800 | 3.77 | 2.52 | 33.10 | 13.12 |
|    | 850 | 3.85 | 2.91 | 24.57 | 8.46 |

The humidity-controlling tiles of Example 4 also were measured for the equilibrium moisture content (%) under an environment having a relative humidity of 10 to 95% to investigate the relationship between the firing temperature and the humidity-controlling property value (%). The results are shown in Fig. 11.

22

As is apparent from Table 2, for all the humidity-controlling tiles using titania having the indicated particle diameters, the apparent specific gravity and the bulk specific gravity increased with increasing the sintering temperature, and the apparent porosity and the water absorption decreased with increasing the sintering temperature. Further, the degree of an increase in bulk specific gravity was larger than the degree of an increase in apparent specific gravity, and the degree of a decrease in water absorption was larger than the degree of a decrease in apparent porosity. On the other hand, from Fig. 11, it was found that, for all the humidity-controlling tiles using titania having the indicated particle diameters, the humidity-controlling property value decreases with increasing the sintering temperature and that a sintering temperature of 700 to 750°C provides a humidity-controlling property value of about 4%. From these facts, it can be said that sintering of molded products produced from titania sols, with titania having a size of 10 to 20 nm dispersed therein, at about 700 to 750°C can provide humidity-controlling functional materials having a high level of humidity-controlling function which can be put to practical use. The reason why the water absorption and the humidity-controlling property value lower with increasing the sintering temperature is believed to reside in that, as described above, upon sintering at a high sintering temperature, bonding of particles proceeds to cause disappearance of gaps among the particles or to cause the size of the gaps to be reduced to less than 2 nm, resulting in lowered humidity-controlling function.

Example 5:

This example corresponds to Example 1 wherein porous alumina particles have been fixed as aggregates of a humidity-controlling functional material. In this case, the humidity-controlling functional material was produced by fixing, as an aggregate, a porous body of alumina having fine pores defined by gaps among particles in the following manner. Specifically, the alumina sinter (porous body of alumina) produced in Example 3 was first provided. In this case, the sinter is not limited to a sinter of a molded product, and sintered particles may also be used. Next, the porous body of alumina was size reduced to particles. The size reduced particles (60% by weight), 20% by weight of a low-melting binder (for example, a glass frit), and 20% by weight of clay as a plastic component were provided and mixed together to prepare a mixture. Thereafter, in the same manner as in Example 1, the slurry or granular powder of the mixture was press molded into a tile which was then fired at about 800°C. This sintering temperature is below the sintering temperature for producing an alumina sinter. Thus, a humidity-controlling tile comprising, as an aggregates, a porous body of alumina having specific fine pores formed by gaps among particles during sintering, the aggregates having been fixed onto one another, could be produced through the above steps. In this humidity-controlling tile, the sintered aggregate of the material particles (sintered, size reduced particles) shown in Fig. 2 corresponds to the aggregate, and adjacent sintered aggregates are fixed onto one another through a binder.

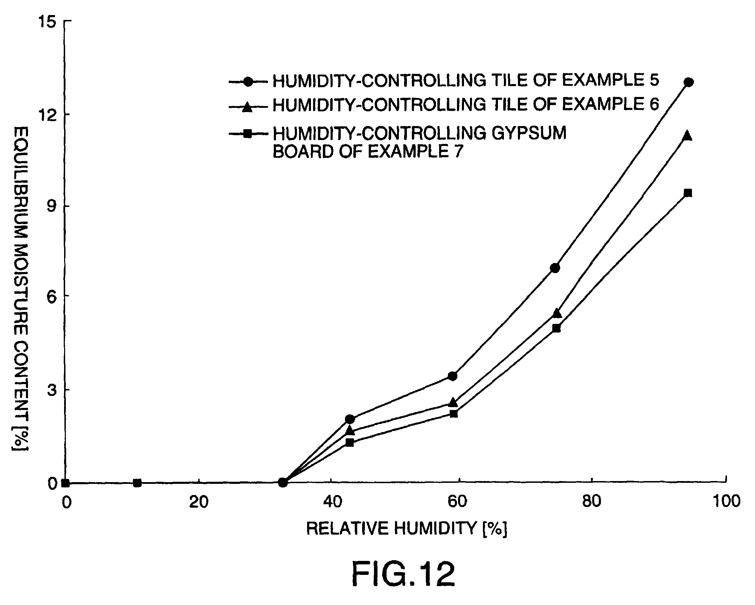

The humidity-controlling tiles of Example 5 thus produced were measured for the equilibrium moisture content (%) under an environment having a relative humidity of 10 to 95% in the same manner as in the above examples. The results are plotted for each relative humidity, and shown in Fig. 12. As is apparent from Fig. 12, for the humidity-controlling tiles of Example 5, the equilibrium moisture content rapidly increased after the relative humidity reached 60%. Therefore, when the relative humidity exceeded 60%, water vapor was efficiently adsorbed by virtue of the high equilibrium moisture content. On the other hand, when the relative humidity became less than 60%, the equilibrium moisture content was decreased to efficiently release the adsorbed water vapor. Thus, the function of controlling the humidity on a high level could be realized through the adsorption and release. That is, also for the humidity-controlling tiles of Example 5, it can be said that the incorporation of a porous body of alumina having the function of controlling the humidity could lead to the function of controlling the humidity on a high level.

Example 6:

This example corresponds to Example 2 wherein porous alumina particles have been incorporated as a filler of a humidity-controlling functional material. In this case, the humidity-controlling functional material was produced by incorporating, as a filler, a porous body of alumina having fine pores defined by gaps among particles in the following manner. Specifically, the alumina sinter (porous body of alumina) produced in Example 3 was first provided. Next, the porous body of alumina was size reduced to particles. The size reduced particles (50 parts by weight) and 50 parts by weight of a conventional tile body material were provided and mixed together to prepare a mixture. In the mixing, the water content was regulated to a suitable value to prepare a slurry which was then press molded into a tile. This tile was fired at about 1000°C. Thus, a humidity-controlling tile comprising a porous body of alumina as a filler incorporated into a matrix of a tile, the porous body of alumina having specific fine pores formed by gaps among particles during sintering, could be produced through the above steps. In this case, the tile after sintering was porous and had pores having a size of not less than 100 nm which was much larger than the fine pores of the porous body of silica. This permits water vapor to reach the fine pores in the porous body of alumina as the filler through the pores of the tile.

Next, the humidity-controlling tile of Example 6 thus produced was measured for the equilibrium moisture content (%) under an environment having a relative humidity of 10 to 95%. The results are also shown in Fig. 12. As is apparent from Fig. 12, for the humidity-controlling tile of Example 6, the equilibrium moisture content rapidly increased after the relative humidity reached 60%. Therefore, when the relative humidity exceeded 60%, water vapor was efficiently adsorbed by virtue of the high equilibrium moisture content. On the other hand, when the relative humidity became less than 60%, the equilibrium moisture content was decreased to efficiently release the adsorbed water vapor. Thus, the function of controlling the humidity on a high level could be realized through the adsorption and release.

Example 7:

This example corresponds to Example 2 wherein porous alumina particles have been incorporated as a filler of a humidity-controlling functional material into a porous body (gypsum). In this case, the humidity-controlling functional material was produced by incorporating, as a filler, a porous body of alumina having fine pores defined by gaps among particles in the following manner. Specifically, the alumina sinter (porous body of alumina) produced in Example 3 was first provided. Next, the porous body of alumina was size reduced to particles (porous body of alumina). The size reduced particles (40 parts by weight) and 60 parts by weight of gypsum were provided and mixed together to prepare a mixture. The water content was regulated to a suitable value, followed by kneading to prepare a kneaded product which was then poured into a mold for molding a board, and molded into a board. The board was dried and allowed to stand for a predetermined period of time. During the stand, water was removed to cure the gypsum. A humidity-controlling gypsum board comprising a porous body of alumina incorporated as a filler into a matrix of gypsum, wherein the porous body of alumina has specific fine pores formed by gaps among particles during sintering, could be produced through the above steps. In this case, as described above, water vapor can reach the fine pores in the porous body of alumina as the filler through the pores of gypsum.

Next, the humidity-controlling gypsum board was measured for the equilibrium moisture content (%) under an environment having a relative humidity of 10 to 95% in the same manner as in the above examples. The results are also shown in Fig. 12. As is apparent from Fig. 12, for the humidity-controlling gypsum board of Example 7, when the relative humidity exceeded 60%, water vapor was efficiently adsorbed by virtue of the high equilibrium moisture content, while when the relative humidity became less than 60%, the equilibrium moisture content was decreased to efficiently release the adsorbed water vapor. Thus, the function of controlling the humidity on a high level could be provided through the adsorption and release.

Also for the humidity-controlling tiles and the humidity-controlling gypsum boards of Examples 3 to 7, the porous body of alumina and the porous body of titania each having fine pores defined by gaps among the particles have the function of controlling the humidity. Variants wherein the function of controlling the humidity is imparted to the surface by using the porous body of alumina and the porous body of titania, will be described. The third variant is such that the surface layer provided on the surface of the core material exhibits the function of controlling the humidity. Specifically, the above porous body of alumina as a material for the surface layer and a glass frit as a binder for fixing the porous body of alumina onto the surface of the core material were provided, and mixed together. The mixture was regulated to a suitable water content to prepare a slurry which was then coated on the surface of a high-melting core material (for example, an aluminum plate). The surface of the coated core material was heat treated at a temperature of about 850°C. A humidity-controlling functional material comprising a surface layer fixed onto a core material, wherein the surface layer has been formed of a porous body of alumina having specific fine pores defined by gaps among particles, could be produced through the above steps. In this humidity-controlling functional material, the porous body of alumina constituting the surface layer exhibits the function of controlling the humidity, and the ability of the functional material to control the humidity was substantially equal to that for the humidity-controlling functional material (humidity-controlling tile) of Example 3. This is true of a surface layer using the porous body of titania.

According to the fourth variant, the porous body of alumina was mixed as a filler into gypsum as a matrix, and the mixture was regulated to a suitable water content, followed by kneading to prepare a kneaded product which was then coated on the surface of a suitable core material (for example, a building material such as wood, resin, metal, or glass). The coated core material was dried and allowed to stand for a predetermined period of time, during which time water was removed to cure the gypsum. Thus, a humidity-controlling functional material comprising a surface layer provided on the surface of a core material, the surface layer comprising a porous body of alumina, having specific fine pores defined by gaps among particles, incorporated as a filler into a matrix of gypsum, could be produced through the above steps. In this humidity-controlling functional material, the porous body of alumina contained as the filler in the surface layer had the function of controlling the humidity, and the ability of the functional material to control the humidity was approximately equal to that for the humidity-controlling functional material (humidity-controlling gypsum board) of Example 7. This is true of a surface layer containing the porous body of titania as a filler.

The fifth variant is a variant of the above variant wherein the surface layer has the function of controlling the humidity. The above-described surface layer is covered with a porous layer which has pores having a diameter larger than the fine pores, for example, a thin layer of gypsum, a thin layer of cement, a porous layer of a cloth wall paper or the like. Also in the fifth variant, water vapor reaches the porous body in the surface layer through the pores in the porous layer. Therefore, without sacrificing the function of controlling the humidity, the porous layer can protect the surface layer to prevent, for example, the damage to and separation of the surface layer, whereby the function of controlling the humidity can be surely maintained. Further, the fifth variant may be varied as follows. Specifically, the surface layer is formed on concaves provided on suitable sites of the surface of the core material, and both the surface layer formed on the concaves and the surface of the core material other than the concaves are covered with the porous layer. According to this variant, the surface layer, which is protected by a porous layer and has the function of controlling the humidity, can be fanned only at sites where the function of controlling the humidity is desired.

Next, examples of humidity-controlling functional materials, which, in addition to the function of controlling the humidity, have the function of removing causative components, that is, decomposing and removing causative components of air pollution or causative components of a bad smell or harmful components, and the antimicrobial function of inhibiting the propagation of bacteria or fungicide, will be described.

Prior to the description of the examples of humidity-controlling functional materials which can newly exhibit the function of removing of causative components and the antimicrobial function, a photocatalyst will be described.

At the outset, the preparation of photocatalyst formulations used in the following examples will be described. Titanium dioxide (anatase form) was used as a photocatalyst. Photocatalyst formulations were prepared through the following steps.

(1) Provision of particles of photocatalyst

The above-described starting materials for titanium dioxide were provided. They were size reduced by means of a grinding device, such as a ball mill, or subjected to a sol-gel process. Thus, fine particles of titanium dioxide were obtained. In this case, size regulation was carried out so that the diameter of the particles was in the range of about 0.005 to 0.5 $\mu$m.

(2) Preparation of sol

Next, the fine particles of titanium dioxide thus prepared were dispersed in a solvent, such as water or an alcohol, to prepare a sol. In this case, the amount of the material to be dispersed in the sol (for example, the weight of titanium dioxide/volume of solvent) is specified.

Example 8:

Next, humidity-controlling functional materials will be described which newly have the function of removing causative components through the utilization of the photocatalyst prepared above. In the present example (Example 8), the above type of a humidity-controlling functional material was produced using the humidity-controlling functional material of Example 1 having the function of controlling the humidity as follows.

The humidity-controlling tile prepared in Example 1 was provided as a substrate. The photocatalyst sol having a specified concentration was spray coated on the surface of the tile. In the spray coating, the coverage, that is, the spray time, was regulated so that the thickness of the photocatalyst mixture layer, on the surface of the tile, after firing was about 0.85 $\mu$m. The tiles, which had been spray-coated with the photocatalyst sols, were then fired at a temperature determined by taking into consideration the melting temperature of silica or the like formulated for fixing the photocatalyst, the melting temperature of titanium dioxide as the photocatalyst, and the firing temperature of the humidity-controlling tile of Example 1 (about 850°C in this example) for about 60 min. Thus, a final humidity-controlling functional material comprising a surface layer containing the sol neutral matters (a photocatalyst) provided on the surface of a substrate (tile) were obtained. In the humidity-controlling functional material (humidity-controlling tile of Example 8) thus obtained, due to the removal of the solvent component in the sol solution by heating during sintering, the surface layer was porous and had pores having a size of about 0.01 to about 0.05 $\mu$m. Therefore, the surface layer permits water vapor to pass through these pores and to reach the underlying surface, that is, the surface of the humidity-controlling tile of Example 1. Thus, the humidity-controlling tile of Example 1 per se can exhibit the function of controlling the humidity without any trouble. It is also possible to use a method wherein the photocatalyst sol is spray coated on the surface of the humidity-controlling tile of Example 1 before firing, followed by simultaneous firing of the humidity-controlling tile and the photocatalyst sol coating. Further, it is a matter of course that spin coating, dip coating or the like may be adopted instead of the spray coating of the photocatalyst sol.

The evaluation of the new property of the humidity-controlling tile of Example 8 will be described. The evaluation was done in terms of the effect of reducing nitrogen oxides which are causative components of pollution or harmful components in the air or in the room desired to be reduced. The evaluation test will be briefly described.

(1-1) Evaluation test: Effect of reducing nitrogen oxides:

For comparison with the product of the example of the present invention, a comparative tile was first provided wherein a surface layer was formed on the surface of a conventional tile not having the function of controlling the humidity (for example, an existing non-glazed tile) in the same manner as in Example 8.

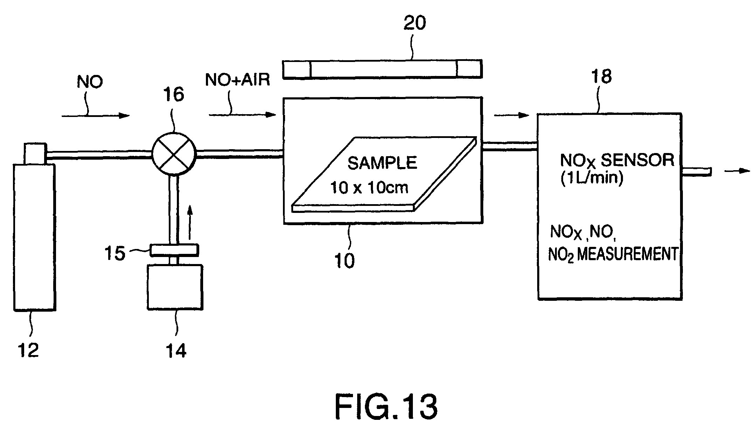

This comparative tile and the humidity-controlling tile (example tile) of Example 8 were tested as follows. In the test, a sample piece having a size of 10 cm square for each of the comparative tile and the example tile was provided, and the effect of reducing nitrogen oxides was measured in a testing apparatus shown in Fig. 13. In this testing apparatus, a cylinder 12 filled with a nitrogen monoxide gas having a constant concentration is provided upstream of a hermetically sealed glass cell 10 in which the sample piece is placed. NO gas from the cylinder 12 is mixed with air, which has been sucked through an air pump 14 and adjusted to desired humidity by means of a humidity controller 15, through a flow rate control valve 16. The NO gas (test gas) having a predetermined concentration (about 0.95 ppm) is flowed at a constant rate (1 liter/min) through the flow rate control valve 16 into the glass cell 10. A concentration meter (NOx sensor) 18 for measuring the concentration of nitrogen oxides in the gas, which has been passed through the cell, is provided downstream of the glass cell 10. The NOx sensor 18 is constructed so that the concentration of NO and the concentration of nitrogen dioxide ($NO_2$ concentration) in the gas are measured at any time, in addition to the measured value of the NO concentration and the measured value of the $NO_2$ concentration, the sum of both the concentrations is output as the nitrogen oxide concentration (NOx concentration). The testing apparatus is provided with a lamp 20 for applying ultraviolet light (wavelength 300 to 400 nm) into the glass cell 10. In this case, the lamp 20 is lighted with control so that the intensity of the ultraviolet light on the sample piece is 1.2 mW/cm$^2$. The sample piece was placed in the glass cell 10 of the testing apparatus, that is, placed under an environment which undergoes ultraviolet irradiation. For each of the comparative tile and the example tile, the $NO_2$ concentration and the NOx concentration were plotted against the elapsed time from the initiation of the flow of the test gas. The results are shown in Fig. 5. The lamp 20 was not lighted until the NOx concentration (NO concentration) on the outlet side has become stable after the initiation of the flow of the test gas.

In the evaluation test 1, if a reaction for oxidizing nitrogen monoxide does not take place, for example, if the glass cell 10 is placed in a dark room so as not to produce active oxygen species by titanium dioxide in the surface layer and to cause a catalytic reaction, the test gas is flowed into the NOx sensor 18 without causing any reaction. Therefore, in this case, the output of the NOx sensor 18 is identical to the test gas concentration (CNO/in) for the NO concentration (CNO/out), the $NO_2$ concentration (CNO$_2$/out) is zero with the NOx concentration (CNOx/out) being CNO/out, that is, identical to CNO/in. However, when NO is oxidized by a catalytic reaction based on active oxygen species produced by titanium dioxide in the surface layer, the NO concentration is reduced from CNO/in by an amount of NO which has been oxidized. Further, when $NO_2$ produced by the oxidation of NO is left from the surface of the tile, the $NO_2$ concentration is increased by an amount of the left $NO_2$. The degree of reduction in NOx is determined from the relationship between the reduction in NO concentration by oxidation of NO and the increase in $NO_2$ concentration by leaving of the formed $NO_2$ from the surface of the tile.

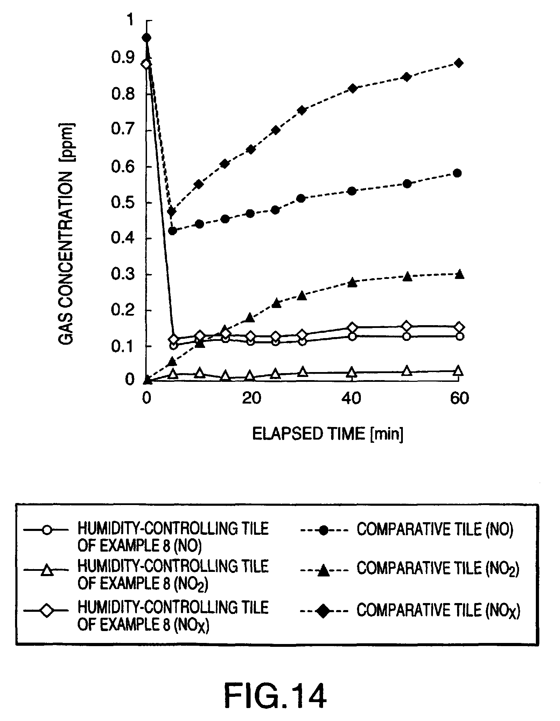

As shown in Fig. 14, for the comparative tile, the NOx concentration and the NO concentration rapidly lowered upon the initiation of the test. After about 5 min had elapsed from the initiation of the test, the NOx concentration began to increase and approached the test gas concentration. Further, for the comparative tile, the $NO_2$ concentration gradually increased after the initiation of the test and, 30 min after the initiation of the test, reached about 0.25 ppm. The NOx concentration and the $NO_2$ concentration were increased in substantially the same fashion. These indicate that, for the comparative tile, the photocatalyst reaction by titanium dioxide in the surface layer proceeds to oxidize NO, resulting in reduced NO concentration. In this case, an increase in $NO_2$ concentration inhibits the reduction in the whole NOx. Although NO is oxidized in this way, the NO concentration is likely to increase gradually. Therefore, NO is not constantly oxidized, and the amount of NO oxidized is likely to be saturated. Therefore, it can be said that, for the comparative tile, since $NO_2$ is left from the surface of the tile, further oxidation of $NO_2$ on the surface of the tile is not significant, and that there is a limitation on the oxidation of NO. The NOx concentration 30 min after the initiation of the test was about 0.75 ppm, and, hence, the reduction in NOx for the comparative tile was about 21.1% ((0.95 - 0.75)/0.95).

On the other hand, for the example tile of Example 8, as with the comparative tile, the NOx concentration rapidly lowered upon the initiation of the test. Thereafter, the NOx concentration was maintained at a value slightly higher than the minimum concentration. Further, for the example tile, the $NO_2$ concentration was not significantly increased after the initiation of the test and, even 30 min after the initiation of the test, was as low as about 0.02 ppm. Further, the NO concentration was substantially the same as the minimum concentration immediately after the initiation of the test. From these facts, it can be first said that, for the example tile, the photocatalytic reaction by titanium dioxide in the surface layer proceeds to oxidize NO, resulting in lowered NO concentration. Further, it can be said that $NO_2$ is not relatively left from the surface of the tile, and further oxidation of $NO_2$ with titanium dioxide actively proceeds, so that the $NO_2$ concentration is not increased. Further, it can be said that NO is constantly oxidized. For this reason, for the example tile, it can be said that NOx could be reduced with very high efficiency. The NOx concentration 30 min after the initiation of the test was about 0.12 ppm, and, hence, the reduction in NOx in the example tile was about 87.4% ((0.95-0.12)/0.95), that is, was substantially four times that of the comparative tile. For the example tile, the above test was continued. As a result, it was found that the high reduction in NOx was maintained. The test was finished 12 hr after the initiation of the test. The surface of the example tiles was washed with water, and the wash liquid was analyzed for materials contained therein. As a result, the presence of nitric acid was confirmed. Thus, NO as a causative component of pollution or a harmful component in the air or in the room can be efficiently converted to and removed as harmless nitric acid. Therefore, the humidity-controlling tile of this example (Example 8) can realize the environmental preservation and the purification of environment.

As described above, the reason why $NO_2$ is not relatively left from the surface of the tile and further oxidation of $NO_2$ with titanium dioxide actively proceeds so that the $NO_2$ concentration does not increase, is considered as follows. At the outset, in the surface layer, the adsorption of NO takes place in pores possessed by the surface layer, and reversible adsorption of NO (gas) takes place in the fine pores in the humidity-controlling tile (humidity-controlling tile of Example 1) underlying the surface layer. Under such a situation, NO undergoes an oxidation reaction by the active oxygen species, so that $NO_2$ is produced as an intermediate product which is finally converted to harmless nitric acid. It can be said that, as with NO, $NO_2$ as the intermediate product causes the adsorption and reversible adsorption in the pores. Therefore, nitric acid is always produced by the photocatalyst under light irradiation.

(1-2) Evaluation test: Effect of reducing acetaldehyde:

Also for acetaldehyde, the reduction by the comparative tile and the reduction by the example tile were investigated using the same apparatus and method as described above in connection with the nitrogen oxides. In this case, the test gas flowed into the glass cell 10 was about 10 ppm of acetaldehyde gas. The concentration of acetaldehyde gas in the gas, which has been passed through the cell, was measured with a concentration meter (gas chromatography) provided downstream of the cell. For the comparative tile and the example tile, the test gas was flowed into the glass cell 10, and the reduction in acetaldehyde was determined by equation $(\rho 0 - \rho s)/\rho 0$ wherein $\rho s$ represents the concentration measured 5 min after the initiation of light irradiation and $\rho 0$ represents the concentration of test gas. The reduction in acetaldehyde 5 min after the initiation of light irradiation was about 46% for the example tile which was about four times larger than the reduction in acetaldehyde for the comparative tile (about 12%). As described above, the improvement in reduction is attributable, for example, to the reversible adsorption of acetaldehyde gas in the fine pores and constant oxidative decomposition by the photocatalyst.

The humidity-controlling tile (example tile) of Example 8 was evaluated for the antimicrobial activity in the following test. The antimicrobial activity was evaluated based on whether or not the tile had the effect of killing Escherichia coli (Escherichia coli IFO 3301 strain).

At the outset, the example tile prepared in Example 8 was cut so that the weight with the photocatalyst-containing surface layer being left was about 10 g. The surface of the sample thus obtained was sterilized with 70% ethanol. Thereafter, this sample was immersed in 100 ml (1 to 5 x $10^4$ CFU/ml) of a suspension of the Escherichia coli (E. coli). The sample was then irradiated with light from a fluorescent lamp through the bacterial suspension, and, at the end of the 24-hr period under light irradiation, the viable cell count $S_{LIVE}$ of the E. coli was determined. The viable cell count $S_{LIVE}$ was determined by collecting 0.1 ml of the bacterial suspension at the end of the 24-hr period, culturing E. coli in the bacterial suspension in agar under an environment kept at 36°C for 24 hr, and, at the end of the culturing period, counting the number of E. coli. In this case, prior to the immersion of the sample, the initial cell count d0 in the suspension of E. coli was counted in the same manner as described above. From the initial cell count d0 and the viable cell count $S_{LIVE}$, the antimicrobial rate (%) was determined by equation: (initial cell count d0 - viable cell count $S_{LIVE}$)/initial cell count d0 , and found to be not less than 90%, indicating that high antimicrobial effect could be provided under irradiation with light from a fluorescent lamp. This is considered attributable to the fact that, under irradiation with light from a fluorescent lamp, titanium dioxide in the surface layer actively produces active oxygen species which degrade the organic component in the E. coli to kill or stop the growth of E. coli. Thus, the example tile of Example 8 can exhibit the function of controlling the humidity and the function of removing the causative components, as well as the antimicrobial function exerted by titanium dioxide as the photocatalyst in the surface layer, whereby comfortable dwelling environment can be realized in terms of humidity.

Further, the example tile had an excellent surface without unacceptable irregularities or other unfavorable phenomena. A sliding abrasion test was carried out using a plastic eraser according to JIS A 6808. As a result, for the example tile, after reciprocating sliding about 40 times, the surface layer caused neither deterioration nor separation, indicating that the abrasion resistance was excellent. This demonstrates that the method involving the preparation of a sol and the spray coating of the sol can easily produce a humidity-controlling functional material (a humidity-controlling tile) having the function of removing the causative components by the photocatalyst in addition to the function of controlling the humidity.

Example 8 described above may be varied as follows. According to this variant, in forming a photocatalyst-containing surface layer, a binder, such as an acrylic silicone- or polysiloxane-containing coating composition, a glass, a fit, a glaze, a silica sol, or an alkali silicate, which may be polymerized or melted at a low temperature (about 50 to about 800°C) may be incorporated into a sol solution of titanium dioxide (a photocatalyst). The photocatalyst sol solution with the binder incorporated therein is then spray coated onto the surface of the humidity-controlling functional material of the above examples (for example, the humidity-controlling tile of Example 1), followed by firing at a temperature (for example, about 150°C) suitable for the incorporated binder. This permits the binder to be polymerized or melted to fix the photocatalysts onto one another, thereby forming a photocatalyst-containing surface layer. As with Example 8, a humidity-controlling functional material can be produced wherein the photocatalyst in the surface layer can newly exhibit the function of removing the causative components.

Next, other examples of humidity-controlling functional materials, which can newly exhibit the function of removing the causative components and the antimicrobial function, will be described.

Example 9:

This example is characterized in that a photocatalyst is incorporated into the humidity-controlling functional materials of the above examples (Examples 1 and 2 or variants thereof). Fine particles of titanium dioxide (anatase form) as a photocatalyst produced by the size reduction by means of a grinding device or by the sol-gel process in the production of the humidity-controlling functional materials of the examples are first provided. The fine particles of titanium dioxide, together with the aggregates (porous alumina particles) in Example 1, were mixed with the binder (glass frit) to prepare a mixture. Thereafter, the procedure of Example 1 is repeated to prepare a humidity-controlling tile. Alternatively, a method may be adopted which comprises mixing the fine particles of titanium dioxide, together with the filler (porous silica particles) used in Example 2, into the matrix (gypsum) to prepare a mixture and then repeating the procedure of Example 2 to prepare a humidity-controlling gypsum board. This can produce a novel humidity-controlling functional material which comprises, together with the aggregate or filler functioning to control the humidity, a photocatalyst which can exhibit the function of removing the causative components and the antimicrobial function. The humidity-controlling functional material of Example 9 can realize environmental preservation and the purification of environment and, in addition, can realize cleaned and comfortable dwelling environment.

In the first and second variants of Examples 1 and 2, the fine particles of titanium dioxide are mixed with the aggregate (porous alumina particles) or the filler (porous silica particles) for the formation of the surface layer functioning to control the humidity to prepare a mixture. Thereafter, the procedure of these variants is repeated to prepare a humidity-controlling functional material (a humidity-controlling tile or a humidity-controlling gypsum board). Thus, a novel humidity-controlling functional material can be provided which comprises an aggregate or a filler functioning to control the humidity in the surface layer provided on the surface of the core material and, in addition, a photocatalyst which functions to remove the causative components and has the antimicrobial function. The humidity-controlling functional material of Example 9 also can realize the environmental preservation and the purification of environment and, in addition, can realize the cleaned and comfortable dwelling environment.

Further, in Examples 1 and 2 or the first and second variants thereof, a photocatalyst sol with the fine particles of titanium dioxide as a photocatalyst dispersed therein is prepared and provided. In regulating the water content in Examples 1 and 2 or the first and second variants thereof, the photocatalyst sol is incorporated to prepare a mixture. Thereafter, the procedure of Examples 1 and 2 or the first and second variants thereof is repeated to prepare a humidity-controlling functional material. Thus, a novel humidity-controlling functional material can be realized which comprises, together with the aggregate or filler constituting the humidity-controlling functional material and functioning to control the humidity or the aggregate or filler functioning to control the humidity in the surface layer provided on the surface of the core material, a photocatalyst which functions to remove the causative components and has the antimicrobial function. The humidity-controlling functional material of Example 9 also can realize the environmental preservation and the purification of environment and, at the same time, can realize cleaned and comfortable dwelling environment.

In the humidity-controlling functional material of Example 9, titanium dioxide as the photocatalyst can be allowed to exist and placed around the fine pores of the aggregate or filler functioning to control the humidity. Therefore, the function of removing the causative components and the antimicrobial function can be advantageously more effectively provided.

Example 10:

This example is characterized in that the porous body having specific fine pores defined by gaps among particles to exhibit the function of controlling the humidity in the above examples (Examples 3 to 7 or variants thereof) as such functions as a photocatalyst. At the outset, in the production of the humidity-controlling functional materials of the examples, fine particles of titanium dioxide as a photocatalyst are provided in the same manner as in Example 9. The fine particles of titanium dioxide as the photocatalyst are regulated to an average particle diameter of about 7 to about 100 nm as described in Examples 3 to 7 and the variants thereof. Thereafter, the procedure of Examples 3 to 7 or the variants thereof is repeated to prepare a humidity-controlling functional material (a humidity-controlling tile, a humidity-controlling gypsum board or the like). Thus, a novel humidity-controlling functional material can be produced wherein the function of controlling the humidity can be exhibited by specific fine pores defined by gaps among particles of the photocatalyst (titanium dioxide) and, in addition, the photocatalyst can also exhibit the function of removing the causative components and has the antimicrobial function. This humidity-controlling functional material of Example 10 also can realize the environmental preservation and the purification of environment and, in addition, can realize cleaned and comfortable dwelling environment.

Further, in Examples 5 to 7 or the variants thereof, the same photocatalyst sol as Example 9 is prepared and provided. In regulating the water content, the photocatalyst sol is incorporated to prepare a mixture. Thereafter, the procedure of Examples 5 to 7 or the variants thereof is repeated to prepare a humidity-controlling functional material. Thus, a novel humidity-controlling functional material can be realized wherein specific fine pores defined by gaps among particles function to control the humidity and, in addition, the photocatalyst constitutes the humidity-controlling functional material per se or the aggregate or filler constituting the surface layer. This novel humidity- controlling functional material can exhibit the function of removing the causative components and has the antimicrobial function, in addition to the function of controlling the humidity. The humidity-controlling functional material of Example 10 also can realize the environmental preservation and the purification of environment and, at the same time, can realize cleaned and comfortable dwelling environment.

In the humidity-controlling functional material of Example 10, titanium dioxide as the photocatalyst as such constitutes the fine pores, and the photocatalyst can be allowed to exist around the fine pores which cause the above-described reversible gas adsorption. Therefore, advantageously, the function of removing the causative components and the antimicrobial function can be more effectively exerted.

Example 11:

This example is characterized in that, in the above examples (Examples 8 to 10), an antimicrobial metal is used in addition to the photocatalyst, whereby the antimicrobial function exerted by the incorporation of the photocatalyst can be compensated for by the antimicrobial metal. At the outset, in the production of the humidity-controlling functional materials of the examples, an acetic acid solution is provided in which an antimicrobial metal, for example, copper (Cu), is present as ions. This acetic acid solution is coated onto the surface of the surface layer in the humidity-controlling functional material having a surface layer containing titanium dioxide as the photocatalyst, in the case of the humidity-controlling functional material of Example 8; onto the surface of or the surface layer in its surface in the humidity-controlling functional material, containing titanium dioxide as the photocatalyst together with the aggregate or the filler, in the case of the humidity-controlling functional material of Example 9; and onto the surface of or the surface layer in its surface in the humidity-controlling functional material, having specific fine pores defined by gaps among the particles of titanium dioxide per se as the photocatalyst, in the case of the humidity-controlling functional material of Example 10. Next, ultraviolet light is applied to the coated surface for about 5 min, and the acetic acid solution is removed, for example, by drying. During the irradiation with ultraviolet light, copper as the antimicrobial metal is fixed on the surface of a photocatalyst by photoreduction caused between the photocatalyst and copper. Thus, the humidity-controlling functional material of Example 11 is completed which contains a photocatalyst and, at the same time, contains copper supported and fixed onto titanium dioxide as the photocatalyst present on the surface. In coating the acetic acid solution of copper, the coverage is regulated so that a satisfactory amount of light is applied onto the photocatalyst. For example, a coverage such that the weight of copper is about 0.8 to 2.0 $\mu g/cm^2$ after the removal of the acetic acid solution, suffices for contemplated results.

The humidity-controlling functional material of Example 11 and the humidity-controlling functional material of Example 8, which contains a photocatalyst and does not bear copper as the antimicrobial metal, were evaluated for the antimicrobial activity as follows. The antimicrobial activity was evaluated based on whether or not the humidity-controlling functional material had the effect of killing Escherichia coli as described in Example 8. In this case, in the humidity-controlling functional material of Example 11, as described above, copper has been supported by photoreduction on the humidity-controlling functional material of Example 8. Therefore, from the results on the evaluation of antimicrobial activity of both the humidity-controlling functional materials, a difference in the antimicrobial function caused by supporting copper becomes apparent.

At the outset, samples as described above are obtained from the humidity-controlling functional material of Example 8 (example tile) and the humidity-controlling functional material of Example 11 (example tile), and the surface of the samples was sterilized with 70% ethanol. Thereafter, these samples were separately immersed in 100 ml (1 to 5 x $10^4$ CFU/ml) of a suspension of E. coli. These samples were then irradiated with light from a fluorescent lamp through the bacterial suspension, and, at the end of the 24-hr period under light irradiation, the viable cell count $SH_{LIVE}$ of the E. coli was determined. In addition, the viable cell count $SS_{LIVE}$ of E. coli in the case where, after the light irradiation, the sample was placed under a light shielded environment for 24 hr, was measured. The viable cell count $SH_{LIVE}$ and the viable cell count $SS_{LIVE}$ were measured through the cultivation of 0.1 ml of the collected bacterial suspension in agar. The antimicrobial rate (%) under light irradiation and the antimicrobial rate (%) under a light-shielded environment were determined based on the initial cell count d0 and the viable cell count $SS_{LIVE}$ or the viable cell count $SS_{LIVE}$. Regarding the calculation of the antimicrobial activity, the antimicrobial rate (%) under light irradiation was determined by equation (initial cell count d0 - viable cell count $SH_{LIVE}$)/initial cell count d0 , and the antimicrobial rate (%) under a light-shielded environment was determined by equation (initial cell count d0 - viable cell count $SS_{LIVE}$)/initial cell count d0 .

For the humidity-controlling functional material of Example 8 which contains titanium dioxide as a photocatalyst and does not bear copper, the antimicrobial rate (%) thus determined was not less than 90% under light irradiation and was less than 30% under a light-shielded environment. For the humidity-controlling functional material of Example 11 wherein copper had been supported and fixed on titanium dioxide as the photocatalyst, the antimicrobial rate (%) was not less than 90% under light irradiation and was also not less than 90% under a light-shielded environment. The results on the antimicrobial rate show that, under irradiation with light from a fluorescent lamp, both the humidity-controlling functional material of Example 8 and the humidity-controlling functional material of Example 11 had high antimicrobial effect. This is considered attributable to the fact that, under irradiation with light from a fluorescent lamp, titanium dioxide actively produces active oxygen species which degrade the organic component in E. coli to kill or stop the growth of E. coli. As is apparent from the change in antimicrobial rate under light irradiation and under a light-shielded environment, however, for the humidity-controlling functional material of Example 8, upon light shielding, the active oxygen species were not produced, and, thus, the antimicrobial effect was not substantially attained. On the other hand, for the humidity-controlling functional material of Example 11, high antimicrobial effect could be attained even under light-shielded conditions. This is attributable to the fact that copper supported on the photocatalyst exhibited the antimicrobial function even under light-shielded conditions. Thus, according to the humidity-controlling functional material of Example 11, when the antimicrobial function cannot be achieved by titanium dioxide as the photocatalyst due to light-shielded conditions, copper can exhibit the antimicrobial function under such light-shielded conditions. Therefore, the humidity-controlling functional material of Example 11 has the function of controlling the humidity and the function of removing the causative components, and, in addition, the antimicrobial function provided by titanium dioxide as the photocatalyst can be compensated for by copper even under light-shielded conditions. Therefore, comfortable dwelling environment can be ensured with higher reliability.

In the humidity-controlling functional material of Example 11, copper has been supported on titanium dioxide as the photocatalyst by photoreduction through light irradiation. Therefore, the metal used is preferably a metal having a reduction potential above the potential (-3.2 V) of free electrons liberated from titanium dioxide as the photocatalyst, because the metal can be supported on titanium dioxide by the reduction potential (supporting by reduction). Specific examples of such metals usable herein include transition metals, such as silver, copper, palladium, iron, nickel, chromium, cobalt, platinum, gold, lithium, calcium, magnesium, aluminum, zinc, rhodium, and ruthenium. Among them, silver, copper, palladium, platinum, and gold are particularly preferred, because they have a positive reduction potential and hence are likely to create supporting by reduction. Further, not only metals but also oxides thereof may be used so far as they have antimicrobial activity.

Example 12:

This example is common to Example 11 in the use of an antimicrobial metal in addition to a photocatalyst, and is characterized in that, instead of the photocatalyst in the above examples (Examples 8 to 10), a photocatalyst with an antimicrobial metal supported thereon was used so that the antimicrobial function could be compensated for by this photocatalyst. At the outset, the step of previously supporting an antimicrobial metal on a photocatalyst will be described.

Also in Example 12, as described above, the metal used is preferably a metal having a reduction potential above the potential (-3.2 V) of free electrons liberated from titanium dioxide as the photocatalyst, because the metal can be supported on titanium dioxide by the reduction potential (supporting by reduction). More specifically, preferred examples of such metals usable herein are the transition metals described above, and particularly preferred are silver, copper, palladium, platinum, and gold, because they have a positive reduction potential and hence are likely to create supporting by reduction. In the use of these metals, methods for supporting the metal onto the photocatalyst will be described. Methods usable for supporting the metal onto the photocatalyst are as follows.

(1) Simple mixing: An aqueous metal salt solution containing a contemplated metal species is added to and mixed with a photocatalyst sol to adsorb metal ions onto the surface of photocatalyst particles, thereby supporting the metal onto the photocatalyst.

(2) Coprecipitation: An aqueous metal salt solution containing a contemplated metal species is added to a photocatalyst sol, followed by addition of a precipitant or heating to simultaneously precipitate the metal salt and the photocatalyst, that is, to cause coprecipitation. Thus, metal ions are supported onto the surface of particles of the photocatalyst.

(3) Supporting before photoreduction: An aqueous metal salt solution containing a contemplated metal species is added to a photocatalyst sol, and the mixture is irradiated with ultraviolet energy. Thus, the metal is supported onto the surface of particles of the photocatalyst by utilizing photoreduction of the metal ions.

(4) Supporting after photoreduction: An aqueous metal salt solution containing a contemplated metal species is coated onto a photocatalyst film, followed by irradiation with ultraviolet energy. Thus, the metal is supported onto the surface of the photocatalyst film by utilizing photoreduction of the metal ions.

(5) Vapor deposition: A contemplated metal in a particulate or compound form is supported by chemical or physical vapor deposition.

(6) Others: Ions of a contemplated metal species are added before the photocatalyst is granulated by the sol-gel process, followed by coprecipitation or the like to bring photocatalyst/metal ions to particles.

In Example 12, a photocatalyst was used wherein a metal had been supported by supporting before photoreduction or by coprecipitation.

In Example 12, at the outset, in the production of the humidity-controlling functional materials of the above examples (Examples 8 to 10), a photocatalyst sol was provided in which a photocatalyst (titanium dioxide) with copper being supported by supporting before photoreduction or by coprecipitation had been dispersed. The photocatalyst sol with copper supported thereon was spray coated in the case of the humidity-controlling functional material of Example 8. In the case of the humidity-controlling functional material of Example 9 or Example 10, fine particles of titanium dioxide with copper supported thereon were prepared from the photocatalyst sol, and the fine particles were mixed with the aggregate or the filler as described in Example 9, or as such were used in the porous body per se as described in Example 10. Subsequently, the steps as described above were carried out to prepare humidity-controlling functional materials of Example 12. For example, when spray coating of the sol of titanium dioxide (photocatalyst sol) with copper supported thereon followed by firing to form the photocatalyst-containing surface layer is contemplated, as described above, the above procedure is followed by sintering at about 850°C.

The humidity-controlling functional material of Example 12 is a humidity-controlling functional material wherein a photocatalyst with titanium dioxide as a photocatalyst supported thereon has been incorporated on the humidity-controlling functional material in its surface.

The humidity-controlling functional material of Example 12 also was evaluated for the antimicrobial activity against E. coli. As a result, the antimicrobial rate was not less than 90% under light irradiation and was also not less than 90% even under light-shielded conditions. As is apparent from the results, as with the humidity-controlling functional material of Example 11, the humidity-controlling functional material of Example 12 has the function of controlling the humidity and the function of removing the causative components, and, in addition, the antimicrobial function provided by titanium dioxide as the photocatalyst can be compensated for by copper even under light-shielded conditions. Therefore, comfortable dwelling environment can be ensured with higher reliability.

Regarding titanium dioxide as the photocatalyst used in the above examples, the crystal form may be rutile or brookite. Further, for example, ZnO, $V_2O_5$, $WO_3$, $SnO_2$, $SrTiO_3$, $Bi_2O_3$, and $Fe_2O_3$ may be used as the photocatalyst instead of titanium dioxide.

Thus, the examples of the present invention have been described. It is a matter of course that the present invention is not limited to the examples and embodiments described above and may be carried out in various embodiments so far as they do not depart from the subject matter of the present invention.

## Claims

1. A humidity-controlling functional material for controlling the humidity through the adsorption of water vapor and the release of water vapor, characterized in that

   said humidity-controlling functional material comprises aggregates and a binder for fixing the aggregates onto one another,
   said aggregate comprises particles having fine pores which can contact with the air, and
   said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g.

2. A humidity-controlling functional material for controlling the humidity through the adsorption of water vapor and the release of water vapor, characterized in that

said humidity-controlling functional material comprises a porous substrate, which also serves as a matrix, and a filler contained in the matrix,

said filler comprises particles having fine pores which can come into contact with the air through the pores of the substrate,

said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g, and

the pores of the substrate have larger diameter than the fine pores of the filler.

3. A humidity-controlling functional material for controlling the humidity through the adsorption of water vapor and the release of water vapor, characterized in that

said humidity-controlling functional material comprises a core material and a surface layer provided on the surface of the core material,

said surface layer contains particles having fine pores which can contact with the air, and

said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g.

4. A humidity-controlling functional material for controlling the humidity through the adsorption of water vapor and the release of water vapor, characterized in that

said humidity-controlling functional material comprises a core material and a surface layer provided on the surface of the core material,

said surface layer comprises a porous substrate, which also serves as a matrix, and a filler contained in the matrix,

said filler comprises particles having fine pores which can come into contact with the air through the pores of the substrate,

said fine pores have diameters such that, depending upon the humidity, the adsorption of water vapor onto the fine pores and the release of water vapor from the fine pores take place to exhibit the function of controlling the humidity, said fine pores having a fine pore volume of about 0.25 to about 1.2 cc/g, and

the pores of the substrate have larger diameter than the fine pores of the filler.

5. A humidity-controlling functional material for controlling the humidity through the adsorption of water vapor and the release of water vapor, characterized in that

fine pores, which can contact with the air, have been formed by gaps among material particles constituting the humidity-controlling functional material per se so as to have diameters such that, depending upon the humidity, the adsorption of water vapor onto the fine pores and the release of water vapor from the fine pores take place to exhibit the function of controlling the humidity.

6. A humidity-controlling functional material for controlling the humidity through the adsorption of water vapor and the release of water vapor, characterized in that

said humidity-controlling functional material comprises aggregates and a binder for fixing the aggregates onto one another,

said aggregate has fine pores which can contact with the air and have been formed by gaps among material particles constituting the aggregate per se so as to have diameters such that, depending upon the humidity, the adsorption of water vapor onto the fine pores and the release of water vapor from the fine pores take place to exhibit the function of controlling the humidity.

7. A humidity-controlling functional material for controlling the humidity through the adsorption of water vapor and the release of water vapor, characterized in that

said humidity-controlling functional material comprises a porous substrate, which also serves as a matrix, and a filler contained in the matrix,

said filler has fine pores which can come into contact with the air through the pores of the substrate and have been formed by gaps among material particles constituting the filler per se so as to have diameters such that, depending upon the humidity, the adsorption of water vapor onto the fine pores and the release of water vapor from the fine pores take place to exhibit the function of controlling the humidity, and

the pores of the substrate have larger diameter than the fine pores of the filler.

8. A humidity-controlling functional material for controlling the humidity through the adsorption of water vapor and the release of water vapor, characterized in that

said humidity-controlling functional material comprises a core material and a surface layer provided on the surface of the core material,

said surface layer has fine pores which can contact with the air and have been formed by gaps among material particles constituting the surface layer per se so as to have diameters such that, depending upon the humidity, the adsorption of water vapor onto the fine pores and the release of water vapor from the fine pores take place to exhibit the function of controlling the humidity.

9. A humidity-controlling functional material for controlling the humidity through the adsorption of water vapor and the release of water vapor, characterized in that

said humidity-controlling functional material comprises a core material and a surface layer provided on the surface of the core material,

said surface layer comprises a porous substrate, which also serves as a matrix, and a filler contained in the matrix,

said filler has fine pores which can come into contact with the air through the pores of the substrate and have been formed by gaps among material particles constituting the filler per se so as to have diameters such that, depending upon the humidity, the adsorption of water vapor onto the fine pores and the release of water vapor from the fine pores take place to exhibit the function of controlling the humidity, and

the pores of the substrate have larger diameter than the fine pores of the filler.

10. The humidity-controlling functional material according to any one of claims 1 to 9, wherein

said fine pores have diameters of about 2 to about 20 nm.

11. The humidity-controlling functional material according to any one of claims 1 to 9, which

controls the relative humidity of an area facing the humidity-controlling functional material to a value of about 40 to 70%.

12. The humidity-controlling functional material according to any one of claims 1 to 9, which

has a humidity-controlling property value of not less than about 5%, said humidity-controlling property value (%) being defined as a difference between the equilibrium moisture content at a relative humidity of 95% and the equilibrium moisture content at a relative humidity of 43% under an environment having a temperature of about 20°C.

13. The humidity-controlling functional material according to claim 1, which

has a humidity-controlling property value of not less than about 10%, said humidity-controlling property value (%) being defined as a difference between the equilibrium moisture content at a relative humidity of 95% and the equilibrium moisture content at a relative humidity of 43% under an environment having a temperature of about 20°C, and wherein

has, in the form of a plate material, a bending strength of not less than 500 N/cm$^2$.

14. The humidity-controlling functional material according to claim 2 or 7, wherein

said porous substrate is a porous building material such as concrete or a gypsum board.

15. The humidity-controlling functional material according to claim 3, 4, 8, or 9, wherein

said core material is a building material selected from concrete, resins, metals, glasses, earthenware, and wood.

16. The humidity-controlling functional material according to claim 3, 4, 8, or 9, which

> further comprises a skin layer covering the surface layer and wherein
> said skin layer is a porous layer which has through-pores having larger diameters than the fine pores.

17. A storage structure for storing articles desired to be stored under a humidity-controlled environment, characterized in that

> the humidity-controlling functional material according to any one of claims 1 to 9 is used as a partition material for partitioning a space for storing the articles.

18. The humidity-controlling functional material according to claim 1, 2, 5, 6, or 7, which

> further comprises a skin layer covering the surface and wherein
> said skin layer is a porous layer that has through-pores having larger diameters than the fine pores and contains a photocatalyst which, upon exposure to light, produces active oxygen species through the action of light energy to permit the photocatalyst to function as a catalyst.

19. The humidity-controlling functional material according to claim 16, wherein

> said skin layer contains a photocatalyst which, upon exposure to light, produces active oxygen species through the action of light energy to permit the photocatalyst to function as a catalyst.

20. The humidity-controlling functional material according to claim 1 or 6, which

> further comprises, in addition to the aggregate, a photocatalyst which, upon exposure to light, produces active oxygen species through the action of light energy to permit the photocatalyst to function as a catalyst.

21. The humidity-controlling functional material according to claim 2 or 7, wherein

> said matrix further contains, in addition to the filler, a photocatalyst which, upon exposure to light, produces active oxygen species through the action of light energy to permit the photocatalyst to function as a catalyst.

22. The humidity-controlling functional material according to claim 5, which

> further comprises, in addition to the material particles constituting the humidity-controlling functional material per se, a photocatalyst which, upon exposure to light, produces active oxygen species through the action of light energy to permit the photocatalyst to function as a catalyst.

23. The humidity-controlling functional material according to claim 3, 4, 8, or 9, wherein

> said surface layer contains a photocatalyst which, upon exposure to light, produces active oxygen species through the action of light energy to permit the photocatalyst to function as a catalyst.

24. The humidity-controlling functional material according to any one of claims 5 to 9, wherein

> said material particles are particles of a photocatalyst which, upon exposure to light, produces active oxygen species through the action of light energy to permit the photocatalyst to function as a catalyst.

25. The humidity-controlling functional material according to any one of claims 18 to 24, wherein

> said photocatalyst is a photocatalyst selected from titanium dioxide, zinc oxide, vanadium oxide, and tungsten oxide.

26. The humidity-controlling functional material according to claim 18 or 19, wherein

said skin layer has been formed through a binder.

27. The humidity-controlling functional material according to claim 26, wherein

said binder is polymerized or melted to have a bonding capability at a temperature below a temperature at which the material constituting the humidity-controlling functional material undergoes a change in properties.

28. The humidity-controlling functional material according to claim 27, wherein

said binder is any one of an acrylic silicone- or polysiloxane-containing coating composition, a glass, a frit, a glaze, a silica sol, and an alkali silicate.

29. The humidity-controlling functional material according to claim 18 or 19, wherein

said skin layer has a metal having antimicrobial activity fixed on the surface thereof.

30. The humidity-controlling functional material according to any one of claims 18 to 25, wherein

said photocatalyst bears on its surface a metal having antimicrobial activity.

31. The humidity-controlling functional material according to claim 30, wherein

said metal has a reduction potential that is not less than the potential of free electrons released by the photocatalyst.

32. The humidity-controlling functional material according to any one of claims 29 to 31, wherein

said metal is at least one member selected from silver, copper, palladium, iron, nickel, chromium, cobalt, platinum, gold, lithium, calcium, magnesium, aluminum, zinc, rhodium, and ruthenium.

33. A process for producing a humidity-controlling functional material for controlling the humidity through the adsorption of water vapor and the release of water vapor, characterized by comprising the steps of:

mixing fine pore-containing particles with a binder having a melting temperature below the fine pore-containing particles, said fine pore-containing particles containing fine pores having diameters of about 2 to about 20 nm and a fine pore volume of about 0.25 to about 1.2 cc/g;
molding the mixture into a molded product; and
heat-treating the molded product at a temperature below the melting temperature of the fine pore-containing particles and above the melting temperature of the binder.

34. The process for producing a humidity-controlling functional material according to claim 33, wherein

the step of mixing the fine pore-containing particles with the binder comprises mixing about 30 to about 85% by weight of the fine pore-containing particles, about 5 to about 70% by weight of the binder, and optionally not more than about 40% by weight of a plastic component together.

35. A process for producing a humidity-controlling functional material for controlling the humidity through the adsorption of water vapor and the release of water vapor, characterized by comprising the steps of:

providing a mixture of fine pore-containing particles, containing fine pores having diameters of about 2 to about 20 nm and a fine pore volume of about 0.25 to about 1.2 cc/g, with porous particles which, upon curing, becomes a porous material containing pores having larger diameters than the fine pores; and
shaping the mixture into a shaped article which is then cured.

36. The process for producing a humidity-controlling functional material according to claim 35, wherein

the step of providing the mixture comprises the step of mixing about 3 to about 150 parts by weight of the fine pore-containing particles with 100 parts by weight of the porous particles.

**37.** A process for producing a humidity-controlling functional material for controlling the humidity through the adsorption of water vapor and the release of water vapor, characterized by comprising the steps of:

mixing fine pore-containing particles with a binder having a melting temperature below the fine pore-containing particles, said fine pore-containing particles containing fine pores having diameters of about 2 to about 20 nm and a fine pore volume of about 0.25 to about 1.2 cc/g;

covering the surface of a core material with the mixture; and

heat-treating the surface of the core material at a temperature which is below the melting temperature of the fine pore-containing particles, above the melting temperature of the binder, and below the melting temperature of the core material.

**38.** A process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm; and

molding the particles of the sintering material into a molded product which is then sintered,

said sintering being carried out at a temperature regulated so that gaps defined by the adjacent particles of the sintering material are filled with the melt of the sintering material to narrow the gaps to a size of about 2 to about 20 nm.

**39.** A process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm;

sintering the particles of the sintering material at a temperature regulated so that gaps defined by the particles of the adjacent sintering material are filled with the melt of the sintering material to narrow the gaps to a size of about 2 to about 20 nm, thereby producing a sinter;

mixing the particles of the sinter thus obtained with a binder having a melting temperature below the particles of the sinter;

molding the mixture into a molded product; and

heat-treating the molded product at a temperature below the melting temperature of the particles of the sinter and above the melting temperature of the binder.

**40.** A process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles and which has been regulated to particles having an average diameter of about 7 to about 100 nm;

sintering the particles of the sintering material at a temperature regulated so that gaps defined by the particles of the adjacent sintering material are filled with the melt of the sintering material to narrow the gaps to a size of about 2 to about 20 nm, thereby producing a sinter;

providing a mixture of the particles of the sinter thus obtained with porous particles which, upon curing, become a porous material containing pores having larger diameters than said narrowed gap size; and

shaping the mixture into a shaped article which is then cured.

**41.** A process for producing a humidity-controlling functional material for controlling the humidity through the adsorption of water vapor and the release of water vapor, characterized by comprising the steps of:

providing a sintering material which upon heat treatment undergoes sintering to cause bonding of adjacent particles to one another and which has been regulated to particles having an average diameter of about 7 to about 100 nm;

sintering the particles of the sintering material at a temperature regulated so that gaps defined by the particles of the adjacent sintering material are filled with the melt of the sintering material to narrow the gaps to a size of about 2 to about 20 nm, thereby producing a sinter;

mixing the particles of the sinter thus obtained with a binder having a melting temperature below the particles of the sinter;

covering the surface of the core material with the mixture; and

heat-treating the surface of the core material at a temperature which is below the melting temperature of the particles of the sinter, above the melting temperature of the binder, and below the melting temperature of the core material.

42. The process for producing a humidity-controlling functional material according to any one of claims 33 to 41, which

further comprises the step of coating a sol solution of a photocatalyst which, upon exposure to light, produces active oxygen species through the action of light energy to permit the photocatalyst to function as a catalyst, onto the surface of the humidity-controlling functional material, and removing a solvent component in the sol solution to form a porous skin layer containing the photocatalyst.

43. The process for producing a humidity-controlling functional material according to any one of claims 33 to 41, which

further comprises the step of coating a mixed solution composed of a photocatalyst, which upon exposure to light produces active oxygen species through the action of light energy to permit the photocatalyst to function as a catalyst, and a binder for bonding of the photocatalyst, onto the surface of the humidity-controlling functional material, and removing a solvent component in the mixed solution and, at the same time, melting the binder to form a porous skin layer comprising the photocatalyst bonded with the binder.

44. The process for producing a humidity-controlling functional material according to claim 33 or 37, wherein

the step of mixing the fine pore-containing particles with the binder is the step of mixing, in addition to the fine pore-containing particles and the binder, a photocatalyst which upon exposure to light produces active oxygen species through the action of light energy to permit the photocatalyst to function as a catalyst.

45. The process for producing a humidity-controlling functional material according to claim 35, wherein

the step of providing the mixture is the step of providing a mixture of the fine pore-containing particles and the porous particles with a photocatalyst which, upon exposure to light, produces active oxygen species through the action of light energy to permit the photocatalyst to function as a catalyst.

46. The process for producing a humidity-controlling functional material according to any one of claims 38 to 41, wherein

the step of providing the sintering material through the regulation of particle diameters is the step of providing as the sintering material a photocatalyst which, upon exposure to light, produces active oxygen species through the action of light energy to permit the photocatalyst to function as a catalyst.

47. The process for producing a humidity-controlling functional material according to claim 42 or 43, which further comprises,

subsequent to the step of forming the skin layer, the step of coating an aqueous metal salt solution containing ions of a metal having antimicrobial activity on the surface of the formed skin layer and the step of irradiating the skin layer with ultraviolet light to photoreduce the metal ions on the photocatalyst, thereby supporting and fixing the metal on the photocatalyst in the skin layer.

48. The process for producing a humidity-controlling functional material according to claim 42 or 43, wherein

the step of forming the skin layer comprises

the step of providing a photocatalyst dispersed sol containing the photocatalyst dispersed therein, and

the step of mixing an aqueous metal salt solution containing ions of a metal having antimicrobial activity into the photocatalyst dispersed sol and producing the photocatalyst with the metal supported thereon.

49. The process for producing a humidity-controlling functional material according to claim 44, wherein

the step of mixing the photocatalyst in addition to the fine pore-containing particles and the binder comprises

the step of providing a photocatalyst dispersed sol containing the photocatalyst dispersed therein, and

the step of mixing an aqueous metal salt solution containing ions of a metal having antimicrobial activity into the photocatalyst dispersed sol and producing the photocatalyst with the metal supported thereon.

**50.** The process for producing a humidity-controlling functional material according to claim 45, wherein

the step of providing a mixture of the fine pore-containing particles and the porous particles with the photocatalyst comprises

the step of mixing an aqueous metal salt solution containing ions of a metal having antimicrobial activity into the photocatalyst dispersed sol and producing the photocatalyst with the metal supported thereon.

**51.** The process for producing a humidity-controlling functional material according to claim 46, wherein

the step of providing as the sintering material the photocatalyst through the regulation of particle diameters comprises

the step of mixing an aqueous metal salt solution containing ions of a metal having antimicrobial activity into the photocatalyst dispersed sol and producing the photocatalyst with the metal supported thereon.

**52.** The process for producing a humidity-controlling functional material according to any one of claims 48 to 51, wherein

the step of producing the photocatalyst with the metal supported thereon comprises

the step of mixing an aqueous metal salt solution containing ions of a metal having antimicrobial activity into the photocatalyst dispersed sol and then irradiating the mixture with ultraviolet light, whereby said metal is supported on the photocatalyst through the photoreduction of the metal ions.

**53.** The process for producing a humidity-controlling functional material according to any one of claims 48 to 51, wherein

the step of producing the photocatalyst with the metal supported thereon comprises

the step of mixing an aqueous metal salt solution containing ions of a metal having antimicrobial activity into the photocatalyst dispersed sol and then coprecipitating the metal salt and the photocatalyst, whereby said metal is supported on the photocatalyst.

FINE PORE

PARTICLE

## FIG.1

MATERIAL
PARTICLE

FINE PORE

## FIG.2

BINDER (GLASS FRIT)

AGGREGATE
(POROUS ALUMINA PARTICLE)

AGGREGATE
(POROUS ALUMINA PARTICLE)

AGGREGATE
(POROUS ALUMINA PARTICLE)

## FIG.3

—●— DIATOMACEOUS TILE
—■— HUMIDITY-CONTROLLING TILE OF EXAMPLE 1
—▲— HUMIDITY-CONTROLLING GYPSUM
BOARD OF EXAMPLE 2

FIG.4

● HUMIDITY-CONTROLLING
TILE OF EXAMPLE 1
✕ DIATOMACEOUS EARTH TILE
(COMPARATIVE EXAMPLE)
■ ZEOLITE TILE (COMPARATIVE EXAMPLE)

FIG.5

FIG.6

MATRIX (GYPSUM)

FILLER (POROUS SILICA PARTICLE)

FILLER (POROUS SILICA PARTICLE)

FILLER (POROUS SILICA PARTICLE)

FIG.7

SURFACE LAYER (POROUS ALUMINA PARTICLE)

CORE MATERIAL

FIG.8

FIG.9

## FIG.10

PARTICLE DIAMETER
OF TITANIA

| | |
|---|---|
| ◆ | 10nm |
| ■ | 17nm |
| ✕ | 20nm |

## FIG.11

FIG.12

EP 1 075 867 A1

FIG.13

EP 1 075 867 A1

FIG.14

# INTERNATIONAL SEARCH REPORT

| International application No. |
|---|
| PCT/JP98/04227 |

**A. CLASSIFICATION OF SUBJECT MATTER**
Int.Cl$^6$ B01D53/28, B01J20/28, E04B1/64

According to International Patent Classification (IPC) or to both national classification and IPC

**B. FIELDS SEARCHED**

Minimum documentation searched (classification system followed by classification symbols)
Int.Cl$^6$ B01D53/28, B01J20/00-20/34, E04B1/64

| Documentation searched other than minimum documentation to the extent that such documents are included in the fields searched | | | |
|---|---|---|---|
| Jitsuyo Shinan Koho | 1926-1996 | Toroku Jitsuyo Shinan Koho | 1994-1998 |
| Kokai Jitsuyo Shinan Koho | 1971-1998 | Jitsuyo Shinan Keisai Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 06-304437, A (Toyoda Central Research and Development Laboratories, Inc.), 1 November, 1994 (01. 11. 94), Claims ; page 2, left column, line 45 to right column, line 29 ; page 3, right column, line 50 to page 4, left column, line 5 ; page 4, left column, line 24 to page 5, right column, line 27 (Family: none) | 1-13, 15, 17, 33, 34, 37 |
| Y | | 16, 18-32, 35, 36, 42-46 |
| Y | JP, 10-18446, A (INAX Corp.), 20 January, 1998 (20. 01. 98), Page 2, left column, line 42 to right column, line 40 (Family: none) | 14, 35, 36, 45 |
| X | JP, 10-2044, A (Hokkaido Prefectural Government), 6 January, 1998 (06. 01. 98), Page 2, right column, line 6 to page 3, right column, line 9 (Family: none) | 1, 10, 11, 17 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| 15 December, 1998 (15. 12. 98) | 22 December, 1998 (22. 12. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| | International application No. |
|---|---|
| | PCT/JP98/04227 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP, 07-113272, A  (Nisshin Steel Co., Ltd.),<br>2 May, 1995 (02. 05. 95),<br>Claims ; page 2, right column, lines 9 to 37 ;<br>page 3, left column, line 13 to right column,<br>line 8  (Family: none) | 16, 18-28, 30,<br>31, 42-46 |
| Y | JP, 54-1920, A  (Kubota, Ltd.),<br>9 January, 1979 (09. 01. 79),<br>Page 2, upper left column, line 7 to upper right<br>column, line 10  (Family: none) | 29, 32 |

Form PCT/ISA/210 (continuation of second sheet) (July 1992)